# EUROPÄISCHE PATENTSCHRIFT

(11) **EP 4 126 290 B1**
(45) Veröffentlichungstag und Bekanntmachung des Hinweises auf die Patenterteilung: **23.10.2024**
(21) Anmeldenummer: 21714859.2
(22) Anmeldetag: 23.03.2021
(51) Int. Cl.: B01D 29/11

(54) **FILTEREINSATZ UND FLÜSSIGKEITSFILTER MIT EINEM DERARTIGEN FILTEREINSATZ**
FILTER INSERT AND LIQUID FILTER COMPRISING SUCH A FILTER INSERT
INSERT DE FILTRE ET FILTRE À LIQUIDE COMPRENANT UN TEL INSERT DE FILTRE

(30) Priorität: 30.03.2020 DE 102020204098
(43) Veröffentlichungstag der Anmeldung: 08.02.2023
(73) Patentinhaber: Robert Bosch GmbH, 70442 Stuttgart (DE)
(72) Erfinder: ARIAS ARIAS, Jose Luis, 28007 Madrid (ES); FERNANDEZ GARCIA, Javier, 28904 Getafe, Madrid (ES)
(86) Internationale Anmeldenummer: PCT/EP2021/057395
(87) Internationale Veröffentlichungsnummer: WO 2021/197916

(56) Entgegenhaltungen:
- EP-A1- 3 517 751
- WO-A1-2017/050371
- DE-A1- 102015 014 601
- DE-A1- 102017 011 279
- US-A1- 2012 248 024

## Beschreibung

### Gebiet der Erfindung

Die Erfindung betrifft einen Filtereinsatz sowie einen Flüssigkeitsfilter mit einem derartigen Filtereinsatz

### Stand der Technik

Filtereinsätze von Flüssigkeitsfiltern werden üblicherweise in ein Inneres eines Gehäuses des Flüssigkeitsfilters eingesetzt, z.B. eingeschoben. Damit sie sich entlang einer axialen Richtung (z.B. der Einsetzrichtung) nicht verlagern können kann vorgesehen sein, sie entweder in ihrer Länge genau an die Innenabmessungen des Gehäuses anzupassen oder sie z.B. mittels einer Feder bzw. eines elastischen Elements gegen ein distales Ende (in axialer Richtung) des Gehäuses vorzuspannen.

Aus der DE 195 19 892 A1 ist ein derartiger Flüssigkeitsfilter mit einem Filtereinsatz bekannt.

Weiterhin ist bekannt, dass es bei Flüssigkeitsfiltern je nach Art der zu filternden Flüssigkeit vorkommen kann, dass die im Flüssigkeitsfilter befindliche Flüssigkeit bei Temperaturänderungen ihr spezifisches Volumen stark ändert und/oder einen anderen Aggregatzustand einnimmt und damit eine starke Volumenzunahme verbunden ist (z.B. wenn Wasser zu Eis gefriert). Dadurch kann die Gefahr bestehen, dass ein Gehäuse des Flüssigkeitsfilters durch die Volumenzunahme beschädigt wird.

Aus dem Stand der Technik ist daher bekannt, in Flüssigkeitsfiltern, z.B. für flüssige Harnstofflösungen zur katalytischen Reduktion von Stickoxiden im Automobilbereich (DENOX), im Innern des Gehäuses ein Volumenausgleichselement anzuordnen, welches nicht mit der Flüssigkeit gefüllt ist, sondern vielmehr elastisch verformbar ist. Bei einer Volumenzunahme der im Gehäuse befindlichen Flüssigkeit wird das Volumenausgleichselement durch das zusätzliche Volumen komprimiert und verhindert auf diese Weise einen übermäßigen Druckanstieg auf die Wände des Gehäuses.

Ein derartiges Volumenausgleichs-Element, ist aus der DE 10 2017 203 796 A1 bekannt.

Aus der DE 10 2017 011 279 A1 sind ein Rundfilterelement eines Filters für Harnstoff-WasserLösung und ein Filter bekannt.

Aus der US 2012 / 0248024 A1 ist ein Filter mit einem Pulsations-Dämpfungselement bekannt.

Aus der DE 10 2015 014 601 A1 ist ein Filterelement mit überragendem Bajonettvorsprung bekannt.

Aus der WO 2017 / 050371 A1 ist eine Filteranordnung bekannt.

Aus der EP 3 517 751 A1 sind ein Volumenkompensationselement sowie ein Filter mit einem derartigen Volumenkompensationselement bekannt.

### Offenbarung der Erfindung

Die Erfindung geht aus von der Erkenntnis, dass beim Wechseln von Filtereinsätzen, die im Innern eines Gehäuses eines Flüssigkeitsfilters angeordnet sind, Demontage und Remontage des Filtereinsatzes einen gewissen Kraftaufwand erfordern. Dies liegt u.a. an der internen Abdichtung des Filtereinsatzes gegenüber dem Gehäuse. Diese wird häufig durch vom Filtereinsatz separate Dichtelemente, z.B. O-Ringe an den Endkappen des Filtereinsatzes bewirkt. Auf diese Weise wird ein fluidischer Kurzschluss zwischen einer Reinseite des Filtereinsatzes und einer Rohseite des Filtereinsatzes verhindert (interne Dichtung). Allerdings muss stets sichergestellt sein, dass diese separaten Elemente vorgehalten und korrekt montiert werden, auch im Wartungsfall. Wenn diese Dichtmittel (radial) gegen eine Wand des Gehäuses gepresst sind muss diese Presskraft als Reibungskraft beim axialen Verlagern des Filtereinsatzes überwunden werden. Um eine Beschädigung eines Filtermediums des Filtereinsatzes oder des Filtereinsatzes zu verhindern ist es erwünscht, dass möglichst geringe Kräfte beim Verlagern des Filtereinsatzes aus dem Gehäuse heraus oder in das Gehäuse hinein notwendig sind. Gleichzeitig soll auch die Dichtwirkung der internen Dichtung gewährleistet sein. Weiterhin geht die Erfindung aus von der Erkenntnis, dass zum Entfernen des Filtereinsatzes aus dem Gehäuse häufig Demontagewerkzeuge zu verwenden sind, da der Filtereinsatz z.B. nicht gut greifbar ist (z.B. weil er keine Angriffspunkte bietet oder recht tief im Gehäuse sitzt, so dass ein Monteur mit seinen Fingern ihn nicht mehr greifen kann) oder da die Gefahr besteht, den Filtereinsatz beim unsachgemäßen Angreifen zu beschädigen (z.B. kann ein flüssigkeitsdurchtränktes Filtermedium reißen). Schließlich geht die Erfindung aus von der Erkenntnis, dass auch eine externe Abdichtung des Flüssigkeitsfilters, d.h. die Abdichtung des Inneren des Flüssigkeitsfilters bzw. des Gehäuses gegen einen Außenraum durch ein separates Dichtelement, z.B. in Form eines O-Rings, erfolgt. Ein solcher O-Ring wird dabei z.B. zwischen dem Gehäuse und einem Deckel angeordnet. Dabei stellt dieser O-Ring ein (weiteres) zusätzliches Bauteil dar, das vorgehalten und richtig platziert werden muss, um eine korrekte externe Abdichtung zu bewirken. Schließlich geht die Erfindung aus von der Erkenntnis, dass beim Vorsehen eines Volumenausgleichselements am oder im Filtereinsatz bzw. Flüssigkeitsfilter das Volumenausgleichselement sehr lose im Filtereinsatz bzw. Flüssigkeitsfilter angeordnet ist und es bei der Montage dazu kommen kann, dass das Volumenausgleichselement nicht in der gewünschten Position verbleibt.

Es hat sich gezeigt, dass das Bereitstellen von mehreren verschiedenen Komponenten, wie z.B. Federn, Dichtmitteln, z.B. O-Ringen, sowie deren Montage beim Zusammenbau des Flüssigkeitsfilters kostenintensiv ist, die Logistik verkompliziert (z.B. bei der Lagerhaltung, der Bereitstellung von Ersatzteilen, etc.) und dass es zu Fehlern bei der Montage kommen kann, indem z.B. eine Feder oder eines der Dichtmittel vergessen wird oder die verschiedenen Dichtmittel vertauscht werden. Durch die hohe Anzahl verschiedener Teile besteht das Risiko, dass der Flüssigkeitsfilter z.B. nach einer Wartung nicht funktional ist, da es eine Leckage nach außen gibt (externe Dichtung dysfunktional) oder einen fluidischen Kurzschluss im Innern des Flüssigkeitsfilters (interne Dichtung dysfunktional). Bei Flüssigkeitsfiltern mit einem Volumenausgleichselement kommt dieses als zusätzlich bereitzuhaltendes, zu lagerndes und zu montierendes Element noch hinzu, was die Komplexität von Logistik, Lagerung und Montage zusätzlich erhöht. Darüber hinaus kann es schwierig sein, das Volumenausgleichs-Element an seinem vorgesehenen Platz im Filter auch beim Durchlaufen mehrerer Kompressions- und Dekompressions-Zyklen (z.B. Eisbildung mit Kompression des Volumenausgleichs-Element, Auftauen mit Dekompression des Volumenausgleichs-Elements) ortsfest zu sichern. Ist eine ortsfeste Sicherung nicht gegeben, so besteht das Risiko, dass das Volumenausgleichs-Element durch eine Lageänderung die interne oder externe Abdichtung oder Zulauf oder Ablauf oder den Filtereinsatz oder die darin bereits abgeschiedenen Partikel beeinträchtigt.

Es kann daher ein Bedarf bestehen, einen Filtereinsatz für einen Flüssigkeitsfilter bereitzustellen, bei dem der Filtereinsatz einfach im Flüssigkeitsfilter zumindest entlang der axialen Richtung gehaltert bzw. festgelegt werden kann, bei dem der Filtereinsatz ohne separates Demontagewerkzeug aus dem Gehäuse entfernbar ist, bei dem in zuverlässiger Art und Weise die externe Abdichtung und die interne Abdichtung dauerhaft sichergestellt ist, der einfach und mit wenigen Montageschritten zusammenzubauen und zu warten ist, bei dem die Anzahl der separat voneinander vorliegenden und miteinander zu montierender Teile gering gehalten ist und bei dem ein optional zu verwendendes Volumenausgleichs-Element zuverlässig und dauerhaft im Innern des Flüssigkeitsfilters im Wesentlichen ortsfest gehalten wird, so dass es die Funktionalitäten des Flüssigkeitsfilters nicht beeinträchtigt und auch keine bereits im Filtereinsatz abgeschiedenen Partikel wieder gelöst werden (z.B. durch Bewegungen des Volumenausgleichs-Elements).

### Vorteile der Erfindung

Dieser Bedarf kann durch den Gegenstand der vorliegenden Erfindung gemäß der unabhängigen Ansprüche gedeckt werden. Vorteilhafte Ausführungsformen der vorliegenden Erfindung sind in den abhängigen Ansprüchen beschrieben.

Gemäß einem ersten Aspekt der Erfindung wird ein Filtereinsatz für einen Flüssigkeitsfilter vorgeschlagen.

Der Filtereinsatz weist eine erste Endkappe sowie eine zweite Endkappe sowie ein in einer axialen Richtung zwischen den beiden Endkappen angeordnetes Filtermedium auf. Die erste Endkappe weist exzentrisch zu einer Längsachse eine Befestigungsstruktur auf, mittels derer der Filtereinsatz im Flüssigkeitsfilter lösbar befestigbar ist.

Die Befestigungsstruktur ist somit eingerichtet, den Filtereinsatz lösbar am oder im Flüssigkeitsfilter zu befestigen bzw. zumindest entlang der axialen Richtung ortsfest zu halten.

Dadurch wird vorteilhaft bewirkt, dass der Filtereinsatz in einfacher Weise im Flüssigkeitsfilter befestigt werden kann. Der Filtereinsatz ist dadurch vorteilhaft zumindest entlang der axialen Richtung im Wesentlichen ortsfest halterbar im Flüssigkeitsfilter. Vorteilhaft sind dazu keine separaten Elemente, wie z.B. Federn, notwendig. Weiterhin vorteilhaft ist es nicht notwendig, dass eine Länge des Filtereinsatzes derart bemessen ist, dass sich der Filtereinsatz im Flüssigkeitsfilter an beiden axialen Enden bzw. mit seiner zweiten Endkappe abstützt. Dadurch wird weiterhin vorteilhaft eine besonders einfache Montage und/oder Demontage ermöglicht.

Die Befestigungsstruktur kann z.B. derart ausgebildet sein, dass sie die erste Endkappe nicht vollständig umläuft. Es kann z.B. vorgesehen sein, dass die Befestigungsstruktur z.B. kein Gewinde ist oder dass sie z.B. keine Presspassung ist, bei der z.B. ein Stutzen in eine Öffnung mit einem Untermaß im Vergleich zum Stutzen eingesetzt wird.

Die erste Endkappe kann z.B. genau eine Befestigungsstruktur aufweisen, lediglich beispielhaft kann sie auch zwei, drei, vier, fünf oder mehr, bevorzugt jedoch weniger als fünf Befestigungsstrukturen aufweisen. Die Befestigungsstruktur(en) kann/können z.B. an oder in der ersten Endkappe vorgesehen sein, z.B. an einer axial nach außen weisenden Außenseite der ersten Endkappe.

Der Flüssigkeitsfilter kann z.B. ein Gehäuse aufweisen. Dieses kann z.B. becherförmig oder z.B. röhrenförmig, etc. ausgebildet sein. Der Flüssigkeitsfilter kann z.B. einen Deckel aufweisen. Der Deckel kann z.B. eingerichtet sein, das Gehäuse zu verschließen, zumindest ein Ende des Gehäuses. Der Deckel kann z.B. einen Deckelboden aufweisen. Der Deckel kann z.B. eine Deckelwand aufweisen. Die Deckelwand kann z.B. einen Deckelboden umlaufen. Der Filtereinsatz kann z.B. eingerichtet sein, im Flüssigkeitsfilter bzw. in seinem Gehäuse bzw. in seinem Inneren montiert bzw. angeordnet zu werden.

Die erste Endkappe kann - in einem im Flüssigkeitsfilter montierten Zustand des Filtereinsatzes - z.B. dem Deckel zugewandt sein (mit ihrer Außenseite).

Die Befestigungsstruktur kann z.B. dem Deckel zugewandt sein.

Der Ausdruck "aufweisen" ist im Kontext dieser Anmeldung synonym zum Ausdruck "umfassen" zu verstehen.

Unter der axialen Richtung ist z.B. eine Richtung entlang einer Längsachse des Flüssigkeitsfilters bzw. des Filtereinsatzes zu verstehen. Es kann sich auch um die Einsteckrichtung des Filtereinsatzes in den Flüssigkeitsfilter handeln. Unter der radialen Richtung ist eine zur axialen Richtung senkrechte Richtung zu verstehen. Unter einer Umlaufrichtung ist eine Richtung zu verstehen, die die axiale Richtung umläuft.

Der Filtereinsatz kann z.B. hohlzylindrisch ausgebildet sein, z.B. kreiszylindrisch. Er kann z.B. rotationssymmetrisch ausgebildet sein, wobei als Symmetrieachse die Längsachse dienen kann.

Es kann z.B. vorgesehen sein, dass die erste Endkappe eine erste Durchgangsöffnung mit einem ersten Innendurchmesser aufweist.

Es kann z.B. vorgesehen sein, dass die Befestigungsstruktur in radialer Richtung betrachtet von einem Zentrum der ersten Endkappe beabstandet ist, z.B. um wenigstens 10% oder wenigstens 20% eines Radius der ersten Endkappe und/oder um wenigstens 3mm oder um wenigstens 5mm. Es kann z.B. vorgesehen sein, dass die Befestigungsstruktur um wenigstens 1mm von einem Rand der ersten Endkappe in radialer Richtung nach innen betrachtet angeordnet ist.

Es kann z.B. vorgesehen sein, dass die Befestigungsstruktur in radialer Richtung betrachtet von einem Rand der ersten Durchgangsöffnung beabstandet ist, z.B. mindestens 10% oder mindestens 20% eines Innendurchmessers der ersten Durchgangsöffnung und/oder mindestens 3mm oder mindestens 5mm oder mindestens 8mm.

Der Filtereinsatz kann z.B. dazu eingerichtet sein eine Reinseite von einer Rohseite zu trennen, insbesondere in einem im Flüssigkeitsfilter montierten Zustand.

Die erste Endkappe kann z.B. eine erste Dicke von wenigstens 1 mm, bevorzugt von wenigstens 2mm aufweisen. Die erste Dicke kann z.B. am Rand bzw., im Bereich der ersten Durchgangsöffnung vorliegen.

Dadurch, dass die Befestigungsstruktur als ein Bajonettverschluss oder als ein Clipsverschluss ausgebildet ist wird eine besonders einfache, stabile und zuverlässige Befestigung des Filtereinsatzes im bzw. am Flüssigkeitsfilter ermöglicht. Vorteilhaft kann so der Filtereinsatz auch besonders einfach und zerstörungsfrei aus dem befestigten bzw. gehalterten Zustand wieder gelöst und z.B. ausgewechselt werden.

In einer Weiterbildung ist vorgesehen, dass die Befestigungsstruktur als ein von der ersten Endkappe axial nach außen abragender Haken ausgebildet ist, der mit einer als Hinterschnitt ausgebildeten Gegenstruktur koppelbar ist.

Dadurch wird vorteilhaft eine besonders einfache und kostengünstige sowie zuverlässig montierbare Befestigungsstruktur geschaffen. Weiterhin vorteilhaft kann so der Einbau eines falschen Filtereinsatzes verhindert werden, da die Befestigungsstruktur und die Gegenstruktur z.B. in der Art einer Schlüssel-Schloss-Schnittstelle nur dann koppelbar sind, wenn Befestigungsstruktur und Gegenstruktur zueinander passen (Poka-Yoke).

Es versteht sich, dass hier auch wieder genau eine einzige Befestigungsstruktur aber auch eine Mehrzahl von Befestigungsstrukturen von der Anmeldung umfasst sind.

Unter einem Haken im Sinne dieser Anmeldung sind allgemein bekannte Hakenformen z.B. bogenförmige Haken und L-förmige Haken (mit einem einzigen freien Hakenende) ebenso umfasst, wie z.B. pilzförmige Haken (diese weisen im Querschnitt z.B. die Form eines "T" auf) mit einer umlaufenden, kappenartigen Hakenstruktur oder auch nur zwei oder mehr freien Hakenenden. Der Haken soll mit der als Hinterschnitt ausgebildeten Gegenstruktur koppelbar sein, so dass im gekoppelten Zustand eine axiale Verlagerung zwischen den gekoppelten Elementen nicht mehr oder nur in geringem Umfang möglich ist.

Ist die Gegenstruktur am Deckel angeordnet, so kann der Deckel vorteilhaft als Demontagewerkzeug beim Entfernen des Filtereinsatzes aus dem Flüssigkeitsfilter verwendet werden. Dadurch kann ein Monteur den Filtereinsatz in einfacher Weise entfernen, ohne mit dem Filtermedium und/oder mit Restflüssigkeit aus dem Flüssigkeitsfilter in Kontakt zu kommen.

Erfindungsgemäß ist vorgesehen, dass an der ersten Endkappe ein Hinterschnitt ausgebildet ist, der als Befestigungsstruktur dient, wobei der Hinterschnitt mit einer als Haken ausgebildeten Gegenstruktur des Flüssigkeitsfilters koppelbar ist.

Die Gegenstruktur kann z.B. am Deckel ausgebildet sein.

Dadurch wird vorteilhaft eine besonders einfache und kostengünstige sowie zuverlässig montierbare Befestigungsstruktur geschaffen. Weiterhin vorteilhaft kann so der Einbau eines falschen Filtereinsatz verhindert werden, da die Befestigungsstruktur und die Gegenstruktur z.B. in der Art einer Schlüssel-Schloss-Schnittstelle nur dann koppelbar sind, wenn Befestigungsstruktur und Gegenstruktur zueinander passen (Poka-Yoke). Weiterhin vorteilhaft wird dadurch ein Filtereinsatz bereitgestellt, bei dem die Außenkontur keine exponiert (nach axial außen) abragenden Teile aufweist, die beim Transport oder beim Handling an anderen Elementen verhaken könnten oder abbrechen könnten.

Ist die Gegenstruktur am Deckel angeordnet, so kann der Deckel vorteilhaft als Demontagewerkzeug beim Entfernen des Filtereinsatzes aus dem Flüssigkeitsfilter verwendet werden. Dadurch kann ein Monteur den Filtereinsatz in einfacher Weise entfernen, ohne mit dem Filtermedium und/oder mit Restflüssigkeit aus dem Flüssigkeitsfilter in Kontakt zu kommen.

Erfindungsgemäß ist vorgesehen, dass die erste Endkappe entlang der axialen Richtung betrachtet eine axial innere erste Lage und eine davon beabstandete axial äußere zweite Lage aufweist, wobei die erste Lage und die zweite Lage durch einen sich im Wesentlichen in axialer Richtung erstreckenden Kragen miteinander verbunden sind, wobei der Hinterschnitt an der zweiten Lage ausgebildet ist.

Dadurch kann vorteilhaft die Dicke der einzelnen Lagen gering gehalten werden und gleichzeitig eine sehr stabile Kopplung (mit ausreichender Materialdicke der zweiten Lage) zur Gegenstruktur bzw. dem Haken ausgebildet werden - verglichen mit einer Endkappe, bei der der Hinterschnitt in einer einzigen Lage ausgebildet wird. Weiterhin vorteilhaft kann dadurch eine Herstellung der Endkappe als Spritzgussteil in einfacher Weise erfolgen.

Dabei kann z.B. vorgesehen sein, dass die erste Lage und die zweite Lage zumindest abschnittsweise überlappen. Beispielsweise kann eine derartige Überlappung sich entlang der radialen Richtung betrachtet (vom Zentrum der ersten Endkappe ausgehend) über wenigstens 10% oder über wenigstens 20% des Radius der ersten Endkappe erstrecken. Die Überlappung kann entlang der Umfangrichtung betrachtet umlaufend vorliegen.

Die beiden Lagen können z.B. im Wesentlichen parallel zueinander verlaufen (+/- 10° von der streng parallelen Ausrichtung).

Der Kragen kann als eine Art Steg ausgebildet sein, der im Wesentlichen in axialer Richtung verläuft, wobei hier auch Abweichungen von der axialen Richtung um z.B. +/-45° möglich sind. Der Kragen hat somit die Funktion, die beiden Lagen fluiddicht miteinander zu verbinden und die Beabstandung entlang der axialen Richtung zu bewirken. Die Beabstandung kann z.B. wenigstens 1mm betragen, bevorzugt wenigstens 2mm. Sie soll ein Eingreifen der Gegenstruktur ermöglichen.

Dadurch, dass die zweite Lage wenigstens eine Lagen-Durchgangsöffnung aufweist, die zum Durchstecken der Gegenstruktur ausgebildet ist, wobei ein Rand der Lagen-Durchgangsöffnung den Hinterschnitt bildet wird vorteilhaft eine relativ glatte Außenkontur (ohne Vorsprünge und Rücksprünge entlang der radialen Richtung) der ersten Endkappe bereitgestellt. Auf diese Weise kann vorteilhaft ein Verhaken von anderen Elementen am (radial äußeren) Rand der ersten Endkappe verhindert werden.

Die Lagen-Durchgangsöffnung(en) liegt bzw. liegen z.B. in der Fläche der zweiten Lage. Sie können z.B. als kreissegmentförmige Schlitze ausgebildet sein. Sie können an einem ihrer Enden eine vergrößerte End-Öffnung (in radialer Richtung) aufweisen. Durch eine solche End-Öffnung kann z.B. der Haken einführbar sein, der dann bei einer Verdrehung des Hakens im Schlitz bzw. in der Lagen-Durchgangsöffnung den Rand der Lagen-Durchgangsöffnung hintergreift und so die Kopplung z.B. zwischen dem Gehäuse bzw. Deckel des Flüssigkeitsfilters und dem Filtereinsatz bewirkt. Die End-Öffnung ist z.B. an demjenigen Ende der Lage-Durchgangsöffnung angeordnet, welches bezüglich einer schließenden Drehung des Deckels am Anfang der Drehbewegung liegt. Auf diese Weise wird der Filtereinsatz beim Festdrehen des Deckels am Gehäuse am Deckel weiter gesichert.

Es kann z.B. für jeden Haken zumindest eine Lagen-Durchgangsöffnung vorgesehen sein.

In einer Weiterbildung ist vorgesehen, dass der Filtereinsatz weiterhin ein Volumenausgleichselement mit einer Basis und einem Zentralkörper aufweist, wobei der Zentralkörper an bzw. mit einem ersten Ende an der Basis angeordnet ist, wobei der Zentralkörper entlang einer Längsrichtung von der Basis abragt und ein von dem ersten Ende abgewandtes zweites Ende aufweist, wobei am Volumenausgleichselement ein Befestigungselement ausgebildet ist, das eingerichtet ist, das Volumenausgleichselement verliersicher an der ersten Endkappe des Filtereinsatzes zu haltern bzw. festzuklemmen bzw. zu befestigen.

Dadurch wird vorteilhaft bewirkt, dass das Volumenausgleichselement in einfacher Weise an dem Filtereinsatz montiert werden kann und anschließend, z.B. beim Handling des Filtereinsatzes (z.B. beim Drehen oder Wenden des Filtereinsatzes) nicht verloren geht bzw. nicht verrutscht. Dadurch ist sichergestellt, dass das Volumenausgleichselement alle seine Funktionen (z.B. Aufnehmen von Eisdruck oder eine Dichtfunktion) jederzeit ausüben kann. Weiterhin vorteilhaft kann auf diese Weise eine zuverlässige Vormontage des Filtereinsatzes (zusammen mit dem Volumenausgleichselement) erfolgen, so dass beim Einsetzens des Filtereinsatzes in den Flüssigkeitsfilter nur ein Element gehandhabt werden muss.

Das Befestigungselement kann z.B. eingerichtet sein, eine zerstörungsfrei lösbare Halterung bzw. Klemmung bzw. Befestigung an bzw. mit der ersten Endkappe bereitzustellen.

Die Längsrichtung kann sich z.B. in einem Zustand, in dem das Volumenausgleichselement am oder im Filtereinsatz montiert ist im Wesentlichen parallel zur axialen Richtung und/oder zur Längsachse des Filtereinsatzes erstrecken.

Der Zentralkörper kann z.B. elastisch-reversibel komprimierbar ausgebildet sein. Er kann z.B. einen Zentralkörper-Innenraum aufweisen. Der Zentralkörper-Innenraum kann z.B. in einem nicht-komprimierten Zustand ein Anfangsvolumen und in einem komprimierten Zustand ein Endvolumen einschließen. Dabei kann die Volumendifferenz zwischen Endvolumen und Anfangsvolumen z.B. zumindest 35% einer maximalen Volumenänderung der im Flüssigkeitsfilter befindlichen Flüssigkeit im Temperaturbereich zwischen +90°C und -40°C bei Normaldruck betragen, bevorzugt wenigstens 50% und besonders bevorzugt wenigstens 75% und ganz besonders bevorzugt wenigstens 90%. Alternativ oder zusätzlich ist das Anfangsvolumen wenigstens um 20% größer ist als das Endvolumen oder wenigstens um 30% größer ist als das Endvolumen, besonders bevorzugt wenigstens um 50% größer als das Endvolumen und ganz besonders bevorzugt wenigstens doppelt so groß wie das Endvolumen (also 100% größer als das Endvolumen).

Dabei kann das Endvolumen z.B. als das Volumen definiert sein, welches vom Volumenausgleichs-Element eingenommen wird im vollständig durch die mögliche Flüssigkeitsvolumenänderung komprimierten Zustand.

Das Volumenausgleichselement kann z.B. dazu eingerichtet sein, bei einer Änderung des Volumens der im Innern des Flüssigkeitsfilters eingeschlossenen Flüssigkeit komprimiert zu werden, und so einen Druckanstieg auf das Gehäuse und den Deckel zu reduzieren, so dass das Gehäuse-Deckel-Ensemble nicht beschädigt wird, z.B. beim Übergang von flüssigem Wasser zu Eis.

Das Volumenausgleichselement kann z.B. ein elastisches Material aufweisen, z.B. einen Elastomer, bzw. aus einem elastischen Material gebildet sein, z.B. aus einem Elastomer. Das Volumenausgleichselement kann z.B. zumindest ein Material aufweisen aus der Gruppe: Gummi, Kautschuk, Silikon, Fluorelastomere, Ethylen- und Propylen-Monomere, Copolymere aus Butadien und Acrylnitril, Neopren. Dadurch wird vorteilhaft eine gute elastische reversible Kompressibilität ermöglicht. Weiterhin vorteilhaft kann das Volumenausgleichselement auf diese Weise auch eine oder mehrere Dichtfunktionen (z.B. eine interne Dichtung und/oder eine externe Dichtung) bewirken.

Der Zentralkörper kann z.B. als offener Hohlraum ausgestaltet sein, in den die Flüssigkeit, die sich im Flüssigkeitsfilter befindet, nicht eindringen kann. Der Zentralkörper kann jedoch auch als geschlossener Hohlraum ausgebildet sein. Der Zentralkörper kann elastisch-reversibel ausgestaltet sein, so dass er bei Nachlassen des Drucks (z.B. beim Schmelzen von Eis) wieder sein Anfangsvolumen einnimmt, gegebenenfalls sogar seine Ursprungsform. Im Hohlraum kann sich entweder Gas (Luft) befinden oder ein elastisch reversibel komprimierbarer Schaumstoff. Der Zentralkörper kann einen Großteil, z.B. mehr als 90%, der Volumenänderungs-Funktionalität des Volumenausgleichs-Elements übernehmen. Der Zentralkörper kann z.B. fluiddicht verschlossen sein, zumindest zwischen dem ersten Ende und dem zweiten Ende.

Der Zentralkörper kann in seinem Zentralkörper-Innenraum wenigstens eine Rippe aufweisen. Diese kann den Zentralkörper vorteilhaft entlang der Längsrichtung stabilisieren.

Die Basis kann z.B. als ein den Zentralkörper umlaufendes Element ausgebildet sein, welches sich z.B. im Wesentlichen quer zum Zentralkörper erstreckt.

Das Volumenausgleichselement kann von innen nach außen betrachtet einen Innenabschnitt aufweisen, an den sich nach radial außen betrachtet ein Mittelabschnitt bzw. Verbindungsabschnitt anschließt an den wiederum sich nach radial außen betrachtet ein Außenabschnitt bzw. äußerer Endabschnitt anschließt. Der Zentralkörper kann z.B. im Innenabschnitt angeordnet sein. Im Mittelabschnitt bzw. Verbindungsabschnitt kann das Volumenausgleichs-Element z.B. ungefähr in radialer Richtung nach außen vom Zentralkörper abragen. Es kann dabei umlaufend geschlossen ausgebildet sein oder in der Art von Speichen oder Rippen vom Zentralkörper abragen. Im Außenabschnitt bzw. im äußeren Endabschnitt kann das Volumenausgleichs-Element z.B. entlang der radialen Richtung verlaufen.

Das Volumenausgleichselement kann z.B. rotationssymmetrisch ausgebildet sein. Dabei kann z.B. die Längsachse des Flüssigkeitsfilters als Symmetrieachse dienen. Die Längsachse des Flüssigkeitsfilters kann z.B. auch die Längsachse des Volumenausgleichselements sein.

Das Volumenausgleichselement kann z.B. einstückig ausgebildet sein. Dadurch kann es vorteilhaft besonders kostengünstig hergestellt, transportiert, gelagert und montiert werden. Das Risiko einer Fehlmontage wird vorteilhaft verringert. Beispielsweise kann das Volumenausgleichs-Element mittels eines Spritzgussverfahrens hergestellt sein. Unter dem Ausdruck "einstückig" kann verstanden werden, dass das Volumenausgleichs-Element nicht zerstörungsfrei zerlegt werden kann. Beispielsweise kann in einem vom Zentralkörper umschlossenen Hohlraum ein kompressibles Element, z.B. ein Schaumstoffelement, angeordnet sein. Dieses kann Bestandteil eines einstückig ausgebildeten Volumenausgleichs-Elements sein, wenn ein solches kompressibles Element nicht aus dem Hohlraum entnommen werden kann ohne den Zentralkörper und/oder den Schaumstoffkörper zu zerstören.

Das Volumenausgleichselement kann z.B. als vom Filtereinsatz separates Element ausgebildet sein. Dadurch kann das Volumenausgleichs-Element vorteilhaft bei einer Wartung einfach gewechselt werden. Dabei kann das Volumenausgleichs-Element zerstörungsfrei lösbar am bzw. im Innern des Flüssigkeitsfilters angeordnet sein. Bevorzugt ist das Volumenausgleichselement dabei nicht mit einem anderen Element des Flüssigkeitsfilters (z.B. dem Filtereinsatz oder dem Deckel oder dem Gehäuse) stoffschlüssig verbunden.

Die Basis kann z.B. flach ausgebildet sein. In diesem Fall ist sie z.B. zum überwiegenden Teil nicht gekrümmt. Sie kann sich z.B. in einer einzigen Ebene erstrecken. Eine Flächennormale der Ebene kann z.B. durch die Längsachse des Zentralkörpers gegeben sein. Die Basis kann z.B. eine zweite Dicke im Bereich von z.B. 1 mm bis 10mm aufweisen, bevorzugt im Bereich von 1,5mm bis 5mm. Die Basis kann einen Basis-Durchmesser von z.B. wenigstens 3cm, bevorzugt von wenigstens 5cm aufweisen, z.B. im Bereich von 3cm bis 30cm.

Die Basis kann z.B. zumindest abschnittsweise an der ersten Endkappe anliegen. Dadurch wird vorteilhaft eine interne Dichtung verbessert. Eine interne Dichtstrecke wird dadurch vorteilhaft verlängert.

Dadurch, dass die erste Endkappe eine erste Durchgangsöffnung aufweist, wobei der Zentralkörper durch die erste Durchgangsöffnung hindurch in den Innenraum des Filtereinsatzes hineinragt, wobei die Basis an einer vom Innenraum abgewandten Außenseite der ersten Endkappe angeordnet ist wird vorteilhaft eine besonders platzsparende Montage des Volumenausgleichselements ermöglicht. Weiterhin vorteilhaft wird bewirkt, dass das Volumenausgleichs-Element entlang der radialen Richtung weitestgehend ortsfest im Flüssigkeitsfilter gesichert ist. Außerdem wird dadurch eine präzise Montage des Volumenausgleichs-Elements begünstigt, da die erste Durchgangsöffnung als eine Art Montagehilfe (Schlüssel-Schloss-Prinzip) wirkt. Gleichzeitig wird dadurch vorteilhaft eine Beschädigung des den Innenraum umgebenden Filtermediums bei einer Volumenausdehnung der Flüssigkeit besonders wirksam verhindert. Weiterhin vorteilhaft kann auf diese Weise eine Demontage des Volumenausgleichselements vom Filtereinsatz besonders einfach erfolgen, da die Basis frei zugänglich ist.

Das Volumenausgleichselement kann z.B. entlang wenigstens 50% oder wenigstens 75% einer Länge des Innenraums entlang der axialen Richtung in den Innenraum hineinragen.

Alternativ oder zusätzlich kann das Volumenausgleichselement zumindest 5mm, bevorzugt mindestens 10mm in den Innenraum hineinragen. Als Bezugsniveau kann z.B. eine dem Innenraum zugewandte Oberfläche der ersten Endkappe dienen.

Dabei kann sich der Innenraum z.B. zwischen den beiden dem Innenraum zugewandten Seiten (Innenseiten) der ersten Endkappe bzw. der zweiten Endkappe erstrecken.

Die erste Durchgangsöffnung kann z.B. zentrisch in der ersten Endkappe angeordnet sein.

Es kann z.B. vorgesehen sein, dass der Zentralkörper im nicht komprimierten Zustand im Bereich der ersten Durchgangsöffnung im Wesentlichen denselben Durchmesser aufweist wie die erste Durchgangsöffnung.

Weiterhin kann z.B. vorgesehen sein, dass die zweite Endkappe eine kanalartige zweite Durchgangsöffnung aufweist. Es kann beispielsweise vorgesehen sein, dass eine solche zweite Durchgangsöffnung den Innenraum des Filtereinsatzes mit einem Zulauf oder mit dem Ablauf des Flüssigkeitsfilters fluidleitend verbindet.

Dadurch, dass die Basis in einer zur axialen Richtung senkrechten radialen Richtung die erste Endkappe überragt wird vorteilhaft bewirkt, dass die Basis als externe Dichtung verwendbar ist. Dadurch kann vorteilhaft ein separates Dichtelement eingespart werden.

Es kann vorgesehen sein, dass die Basis den (radial äußeren) Rand der ersten Endkappe um wenigstens 5% eines Radius der ersten Endkappe überragt, bevorzugt um wenigstens 10%. Alternativ oder zusätzlich kann vorgesehen sein, dass die Basis den Rand der ersten Endkappe um wenigstens 1 mm, bevorzugt um wenigstens 3mm überragt. Es kann z.B. vorgesehen sein, dass die Basis den radial äußeren Rand der ersten Endkappe vollständig umlaufend überragt. Sie kann den radial äußeren Rand der ersten Endkappe z.B. gleichmäßig überragen.

In einer Weiterbildung ist vorgesehen, dass das Volumenausgleichselement eine interne Dichtung ausbildet, wobei die interne Dichtung die erste Durchgangsöffnung fluiddicht abdichtet.

Dadurch kann vorteilhaft ein separates Dichtelement, z.B. ein O-Ring zur internen Abdichtung eingespart werden, z.B. an einer radialen Außenseite der ersten Endkappe. Dieses Dichtelement ist somit vorteilhaft in das Volumenausgleichselement integriert. Dies erleichtert das Handling, die Montage und die Lagerhaltung, da weniger Teile berücksichtigt bzw. vorgehalten werden müssen. Bei weniger separaten Teilen sinkt das Risiko, dass ein Element bei der Montage vergessen wird. Weiterhin vorteilhaft kann so eine Montagekraft bzw. Demontagekraft beim Einsetzen bzw. Herausziehen des Filtereinsatzes in/aus dem Flüssigkeitsfilter verringert werden. Denn die interne Abdichtung mittels eines an einer Endkappe angeordneten Dichtelements (O-Ring) bewirkt Reibungskräfte beim Montieren/Demontieren. Wird die interne Dichtung an der ersten Endkappe durch das Volumenausgleichselement bewirkt, so treten keine erhöhten Montage- bzw. Demontagekräfte auf.

Die interne Dichtung kann derart ausgebildet sein, dass ein fluidischer Kurzschluss zwischen der Reinseite und der Rohseite durch die erste Durchgangsöffnung hindurch verhindert ist.

Die interne Dichtung kann z.B. mittels der Basis und/oder mittels des Befestigungselements bewirkt werden. Die Basis und/oder das Befestigungselement können im Zusammenwirken mit der ersten Endkappe eine interne Dichtstrecke ausbilden. Eine solche interne Dichtstrecke kann z.B. geeignet ausgebildet sein, um einen Übertritt von Flüssigkeit von der Reinseite durch die erste Durchgangsöffnung hindurch auf die Rohseite oder umgekehrt zu verhindern.

In einer Weiterbildung ist vorgesehen, dass das Befestigungselement an dem Zentralkörper angeordnet ist. Dadurch kann vorteilhaft die Basis mit einheitlicher Dicke ausgestaltet werden.

Das Befestigungselement kann z.B. als ein - vom Zentralkörper - nach radial außen abragender Vorsprung ausgebildet sein. Dadurch ist vorteilhaft eine besonders einfache Befestigung bzw. eine Verrastung möglich.

Beispielsweise kann der Vorsprung an einem Rand der ersten Durchgangsöffnung, der dann als Hinterschnitt dient, verrasten. Das Befestigungselement kann z.B. eine Nasenform aufweisen. Das Befestigungselement kann z.B. eine Einführschräge aufweisen. Dadurch wird vorteilhaft ein besonders einfaches Einstecken bzw. Einführen des Zentralkörpers bzw. des Befestigungselements durch die erste Durchgangsöffnung ermöglicht.

In einer Weiterbildung ist vorgesehen, dass das Befestigungselement um einen ersten Abstand von der Basis beabstandet ist, wobei der erste Abstand in einem Bereich von 85% bis 100% einer ersten Dicke der ersten Endkappe liegt.

Dadurch wird vorteilhaft eine besonders gute, sichere und ortsfeste Befestigung des Volumenausgleichselements am Filtereinsatz bewirkt - in axialer und/oder radialer Richtung und/oder bezüglich einer Verdrehung entlang der Umlaufrichtung. Denn dadurch ist das Volumenausgleichselement an der ersten Endkappe festgeklemmt zwischen der Basis und dem Befestigungselement des Volumenausgleichselements. Weiterhin vorteilhaft wird so eine besonders gute interne Dichtung bewirkt, da das Volumenausgleichselement sich im Bereich der ersten Durchgangsöffnung selber an die erste Endkappe anpresst. Ein externer Druck (z.B. durch den Deckel des Flüssigkeitsfilters) ist dann nicht zwingend notwendig, um eine zuverlässige interne Dichtstrecke sicher auszubilden.

Das Befestigungselement kann z.B. von einer dem Zentralkörper zugewandten ersten Seite der Basis beabstandet sein.

Die erste Dicke der ersten Endkappe kann z.B. im Bereich der ersten Durchgangsöffnung bestimmt werden.

In einer Weiterbildung ist vorgesehen, dass der Zentralkörper entlang der Längsrichtung betrachtet in einem Bereich zwischen der Basis und dem Befestigungselement einen Außendurchmesser aufweist, der mindestens 90% eines Innendurchmessers der ersten Durchgangsöffnung der ersten Endkappe beträgt, bevorzugt wenigstens 95% des Innendurchmessers. Der Außendurchmesser kann in diesem Bereich auch ein geringes Übermaß gegenüber dem Innendurchmesser der ersten Durchgangsöffnung aufweisen.

Dadurch wird vorteilhaft eine besonders sichere Befestigung des Volumenausgleichselements am Filtereinsatz geschaffen. Besonders die radiale Positionierung wird dadurch vorteilhaft verbessert. Weiterhin vorteilhaft wird dadurch die interne Dichtung verbessert. Die interne Dichtstrecke wird dadurch verlängert bzw. es wird eine Art Labyrinthdichtung geschaffen.

Gemäß einem zweiten Aspekt der Erfindung wird ein Flüssigkeitsfilter vorgeschlagen.

Der Flüssigkeitsfilter weist ein Gehäuse auf sowie einen Deckel mit einem Deckelboden sowie einen in ein Inneres des Gehäuses eingesetzten Filtereinsatz wie oben beschrieben. Der Flüssigkeitsfilter kann zusätzlich ein Volumenausgleichselement wie oben beschrieben aufweisen bzw. er kann einen Filtereinsatz mit einem Volumenausgleichselement aufweisen.

Dadurch wird vorteilhaft ein Flüssigkeitsfilter bereitgestellt, bei dem der Filtereinsatz besonders einfach und mit wenigen Teilen montierbar und demontierbar ist. Der Filtereinsatz wird in einfacher Weise ohne weitere, zusätzliche Teile mittels der Befestigungsstruktur am bzw. im Flüssigkeitsfilter befestigt bzw. gehaltert. Wenn ein Volumenausgleichselement vorgesehen ist, so wird weiterhin vorteilhaft ein Flüssigkeitsfilter bereitgestellt, bei dem der Filtereinsatz und das Volumenausgleichselement besonders sicher (verwechslungssicher) montierbar und demontierbar sind, bei dem die Montage und Demontage mit besonders wenig Kraftaufwand möglich ist, bei dem nur wenige Teile bei der Montage zu verbauen sind und bei dem eine sichere interne Dichtung bereitgestellt werden kann.

Der Filtereinsatz kann z.B. verliersicher am Deckel gehaltert sein, z.B. indem am Deckel die Gegenstruktur zur Befestigungsstruktur des Filtereinsatzes ausgebildet ist. Auch ein möglicherweise vorhandenes Volumenausgleichselement kann verliersicher am Deckel gehaltert sein. Dadurch kann der Deckel neben der Verschlussfunktion auch als Montage- und Demontagewerkzeug für den Filtereinsatz (und ggf. für das Volumenausgleichselement) dienen. Beispielsweise kann zunächst das Volumenausgleichselement am bzw. im Filtereinsatz montiert werden (falls ein Volumenausgleichselement vorgesehen ist). Anschließend kann der Filtereinsatz mittels der Befestigungsstruktur am Deckel befestigt werden. Schließlich kann der Deckel mit dem daran montierten Filtereinsatz am Gehäuse montiert werden, z.B. indem der Filtereinsatz in das Gehäuse eingesteckt wird und anschließend der Deckel fluiddicht am Gehäuse befestigt wird, z.B. durch einen Clipsverschluss, eine Verschraubung, etc. Bei der Demontage wird mit dem Entfernen des Deckels vom Gehäuse auch der Filtereinsatz aus dem Gehäuse entfernt, solange Befestigungsstruktur und Gegenstruktur gekoppelt sind. Dadurch wird ein separates Demontagewerkzeug entbehrlich.

Der Deckel kann z.B. becherförmig ausgebildet sein. Er kann z.B. eine Deckelwand aufweisen, die den Deckelboden umläuft.

Der Deckel kann dazu eingerichtet sein, das Gehäuse zu verschließen. Deckel und Gehäuse bilden dann ein geschlossenes Filtergehäuse.

Der Flüssigkeitsfilter kann z.B. einen Zulauf und einen Ablauf aufweisen. Der Zulauf kann z.B. für die zu filtrierende Flüssigkeit und der Ablauf kann z.B. für die gefilterte Flüssigkeit vorgesehen sein.

In einer Weiterbildung ist vorgesehen, dass der Flüssigkeitsfilter ein Volumenausgleichselement wie oben beschrieben aufweist, wobei das Gehäuse eine dem Deckel zugewandte Stirnseite aufweist, wobei die Basis des Volumenausgleichselements in axialer Richtung betrachtet zwischen der Stirnseite und dem Deckelboden angeordnet ist, wobei die Basis eine externe Dichtung ausbildet, die das Innere des Gehäuses fluiddicht von einem Außenraum des Flüssigkeitsfilters abdichtet.

Dadurch wird vorteilhaft ein weiteres, separates Dichtelement eingespart. Weiterhin vorteilhaft ist sichergestellt, dass das Volumenausgleichselement bei der Montage nicht vergessen wird. Denn würde es bei der Montage vergessen, so wäre dies sofort an einem ungewohnten haptischen Gefühl beim Schließen des Gehäuses erkennbar (es fehlte der Gegendruck der externen Dichtung). Außerdem würde man dies beim Befüllen des Flüssigkeitsfilters unmittelbar an einer Leckage von Flüssigkeit nach außen erkennen.

Weiterhin vorteilhaft wird so eine besonders leichte, einfache und wenig kraftaufwendige Montage bzw. Demontage des Filtereinsatzes ermöglicht, da die Basis bei der Montage nicht - in radialer Richtung betrachtet - zwischen dem Filtereinsatz und der Gehäuseinnenwand zur Anlage kommt und so keine Reibung beim Einsetzen bzw. Herausnehmen des Filtereinsatzes ins Gehäuse bzw. aus dem Gehäuse überwunden werden muss. Die externe Dichtung (und auch die interne Dichtung) im Bereich des Deckels kann vorteilhaft durch die axiale Lage des Deckels relativ zum Gehäuse präzise eingestellt werden. Wird der Deckel z.B. am Gehäuse verschraubt, so kann durch ein stärkeres Zuschrauben die Verpressung der Basis erhöht werden und damit die Dichtwirkung.

Es kann somit vorgesehen sein, dass die Basis im fertig montierten Zustand des Flüssigkeitsfilters zwischen der Stirnseite und dem Deckelboden verpresst bzw. zusammengepresst ist. Dadurch wird eine externe Dichtstrecke besonders zuverlässig sicher gestellt.

In einer Weiterbildung ist vorgesehen, dass die Basis des Volumenausgleichselements im Bereich der ersten Durchgangsöffnung in axialer Richtung betrachtet zwischen der ersten Endkappe und dem Deckelboden angeordnet ist. Dadurch wird vorteilhaft die interne Dichtung verbessert.

Es kann vorgesehen sein, dass die Basis zwischen der ersten Endkappe und dem Deckelboden verpresst bzw. zusammengepresst ist. Auf diese Weise wird die interne Dichtstrecke verbessert bzw. verlängert.

Dadurch wird weiterhin vorteilhaft bewirkt, dass ein fluidischer Kurzschluss zwischen der Reinseite und der Rohseite verhindert ist. Insbesondere ein fluidischer Kurzschluss durch die erste Durchgangsöffnung hindurch.

### Zeichnungen

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.

Es zeigen
- Fig. 1:: einen schematischen Querschnitt eines Flüssigkeitsfilters aus dem Stand der Technik;
- Fig. 2a:: einen schematischen Querschnitt eines Flüssigkeitsfilters;
- Fig. 2b:: einen vergrößerten Ausschnitt des Flüssigkeitsfilters aus Fig. 2a;
- Fig. 3:: eine geschnittene schematische perspektivische Ansicht eines Deckels eines Flüssigkeitsfilters mit daran montiertem Filtereinsatz und Volumenausgleichselement;
- Fig. 4:: eine schematische perspektivische Ansicht eines Deckels eines Flüssigkeitsfilters und eine daran befestigte erste Endkappe eines Filtereinsatzes;
- Fig. 5:: eine schematische perspektivische Ansicht eines Filtereinsatzes für einen Flüssigkeitsfilter;
- Fig. 6:: eine schematische perspektivische Ansicht eines Deckels eines Flüssigkeitsfilters und eines Volumenausgleichselements;
- Fig. 7:: eine perspektivische Schrägaufsicht auf ein Volumenausgleichselement.

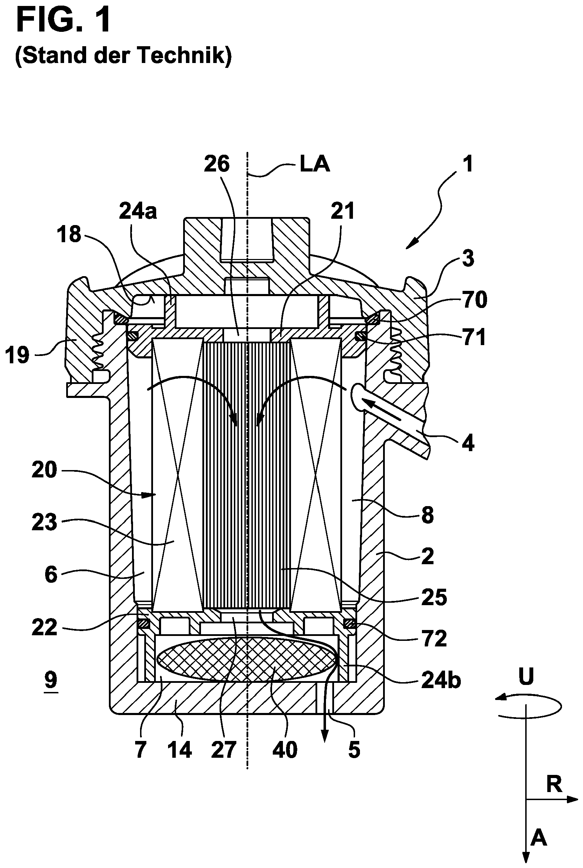

**Figur 1** zeigt einen schematischen Querschnitt eines Flüssigkeitsfilters 1 aus dem Stand der Technik.

Der Flüssigkeitsfilter 1 weist ein Gehäuse 2 mit einem Deckel 3 mit einem Deckelboden 18 und einer den Deckelboden 18 umlaufenden Deckelwand 19 auf. Der Flüssigkeitsfilter 1 weist weiterhin einen Zulauf 4 für eine Flüssigkeit und einen Ablauf 5 für die Flüssigkeit sowie einen Filtereinsatz 20 auf. Der Filtereinsatz 20 ist in einem Inneren 6 des Gehäuses 2 angeordnet und weist eine dem Deckel 3 zugewandte erste Endkappe 21, eine zweite Endkappe 22 und ein in einer axialen Richtung A zwischen den beiden Endkappen 21, 22 angeordnetes Filtermedium 23 auf. Die zweite Endkappe 22 weist dabei einem Boden 14 des hier becherartig ausgebildeten Gehäuses 2 zu. Die Schwerkraftrichtung kann dabei beispielsweise vom Deckel 3 zum Boden 14 zeigen. Der Filtereinsatz 20 trennt eine Reinseite 7, auf welcher gefilterte Flüssigkeit vorliegt, von einer Rohseite 8, auf der sich die zu filternde Flüssigkeit befindet. Die erste Endkappe 21 weist eine kanalartige erste Durchgangsöffnung 26 auf. Die zweite Endkappe 22 weist eine kanalartige zweite Durchgangsöffnung 27 auf. Der Filtereinsatz 20 ist hier hohlzylindrisch ausgebildet und umschließt einen Innenraum 25 zwischen der ersten Endkappe 21 und der zweiten Endkappe 22. Die erste Endkappe 21 weist ein erstes Stützelement 24a auf, welches zum Deckel 3 abragt. Die zweite Endkappe 22 weist ein zweites Stützelement 24b auf, welches zu einem Boden des Gehäuses hin abragt (in der Figur unten). Mittels der beiden Stützelemente 24a, 24b ist der Filtereinsatz 20 zwischen dem Deckel 3 und dem Boden eingespannt und somit entlang der axialen Richtung A im Wesentlichen ortsfest festgelegt. In **Figur 1** ist unter dem Filtereinsatz 20 ein Volumenausgleichselement 40 angeordnet, welches elastisch-reversibel komprimierbaren ist zwischen einem Anfangsvolumen und einem Endvolumen: Es kann bei einer Volumenänderung der im Inneren 6 befindlichen Flüssigkeit das zusätzliche Volumen dadurch aufnehmen, dass es ausgehend vom Anfangsvolumen komprimiert wird. Dadurch wird eine Druckbelastung des Gehäuses 2 und des Deckels 3 verringert.

Die externe Abdichtung zwischen dem Inneren 6 und einem Außenraum 9 des Flüssigkeitsfilters 1 wird durch eine hier z.B. als separater O-Ring ausgebildete Gehäusedichtung 70 verwirklicht.

Die interne Abdichtung zwischen Rohseite 8 und Reinseite 7 erfolgt durch eine erste Filtereinsatzdichtung 71 und eine zweite Filtereinsatzdichtung 72, die an der radialen Außenseite der ersten Endkappe 21 bzw. zweiten Endkappe 22 angeordnet sind und die beiden Endkappen 21, 22 gegen das Gehäuse 2 in Art einer Radialdichtung abdichten.

Die axiale Richtung A erstreckt sich hier entlang einer Längsachse LA des Flüssigkeitsfilters 1 bzw. des Filtereinsatzes 20. Eine radiale Richtung R erstreckt sich senkrecht zur axialen Richtung A. Eine Umlaufrichtung U umläuft die axiale Richtung A.

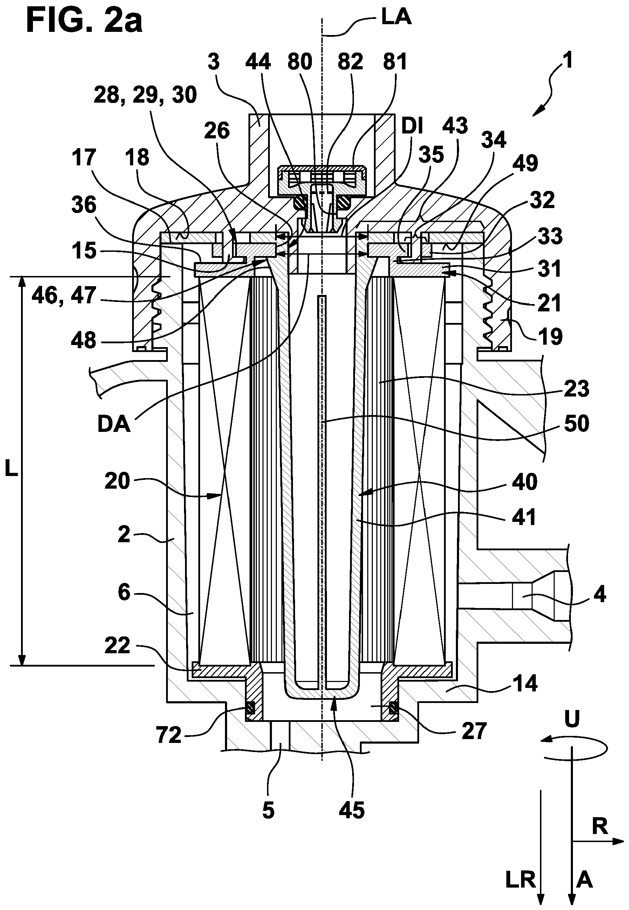

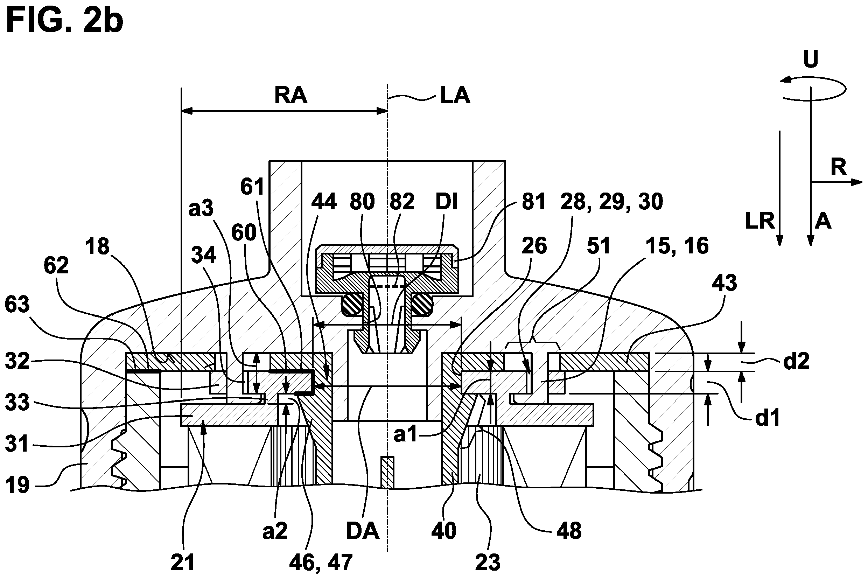

**Figur 2a** zeigt einen schematischen Querschnitt eines Flüssigkeitsfilters 1 und **Figur 2b** einen vergrößerten Ausschnitt des Flüssigkeitsfilters 1 aus **Fig. 2a****.**

Der Flüssigkeitsfilter 1 weist ein Gehäuse 2, einen Deckel 3 (hier beispielhaft mit einem Deckelboden 18 und einer Deckelwand 19 ausgebildet) sowie einen in ein Inneres 6 des Gehäuses 2 eingesetzten Filtereinsatz 20 auf. Der Filtereinsatz 20 weist hier beispielhaft ein Volumenausgleichselement 40 auf. Dabei sind der Filtereinsatz 20 und das Volumenausgleichselement 40 verliersicher am Deckel 3 gehaltert.

Der Filtereinsatz 20 ist eingerichtet, im Inneren 6 des Flüssigkeitsfilters 1 bzw. des Gehäuses 2 angeordnet bzw. montiert zu werden bzw. in das Innere 6 eingesetzt bzw. eingesteckt zu werden.

Der Filtereinsatz weist eine erste Endkappe 21 auf, die hier dem Deckel 3 zugewandt ist, sowie eine zweite Endkappe 22 sowie ein in einer axialen Richtung A zwischen den beiden Endkappen 21, 22 angeordnetes Filtermedium 23.

Eine Länge L des Filtereinsatzes 20 entspricht hier z.B. der Entfernung zwischen den beiden Endkappen 21, 22 entlang der axialen Richtung A betrachtet.

Die erste Endkappe 21 weist exzentrisch zu einer Längsachse LA eine, insbesondere die erste Endkappe 21 nicht vollständig umlaufende, Befestigungsstruktur 28 auf, mittels derer der Filtereinsatz 20 im Flüssigkeitsfilter 1 lösbar befestigt ist. Die Befestigungsstruktur 28 ist hier entlang der radialen Richtung R betrachtet zwischen einem äußeren Rand der ersten Endkappe 21 und einem Rand einer ersten Durchgangsöffnung 26 angeordnet.

Die Befestigungsstruktur 28 ist hier beispielhaft als eine Art Bajonettverschluss 29 ausgebildet.

Wie in den **Figs. 2a** **und** **2b** zu erkennen ist ist dazu an der ersten Endkappe 21 ein Hinterschnitt 30 ausgebildet, der als Befestigungsstruktur 28 dient, wobei der Hinterschnitt 30 mit einer als Haken 16 ausgebildeten Gegenstruktur 15 am Deckel 3 des Flüssigkeitsfilters 1 lösbar koppelbar ist bzw. in den **Figs. 2a** **und** **2b** lösbar gekoppelt ist. In dem dargestellten Ausführungsbeispiel sind zwei Befestigungsstrukturen 28 an bzw. in der ersten Endkappe 21 vorgesehen. Ebenso gut ist auch lediglich eine einzige Befestigungsstruktur 28 oder sind mehr als zwei Befestigungsstrukturen 28 möglich.

Es sind Kombinationen möglich, bei denen an der ersten Endkappe 21 sowohl wenigstens ein Haken als auch wenigstens ein Hinterschnitt als Befestigungsstrukturen 28 ausgebildet sind und dazu komplementäre Gegenstrukturen 15 (Hinterschnitt / Haken) an dem Deckel 3.

Weiterhin ist es denkbar, dass die Befestigungsstruktur 28 z.B. als Clipsverbindung ausgebildet ist.

Die erste Endkappe 21 weist entlang der axialen Richtung A betrachtet eine axial innere erste Lage 31 und eine davon beabstandete axial äußere zweite Lage 32 auf. Die erste Lage 31 und die zweite Lage 32 sind durch einen sich in axialer Richtung A erstreckenden Kragen 33 miteinander verbunden. Die erste Lage 31 und die zweite Lage 32 überlappen entlang der radialen Richtung R über ca. wenigstens 20% eines Radius RA der ersten Endkappe 21. Der als Befestigungsstruktur 28 dienende Hinterschnitt 30 ist an der zweiten Lage 32 ausgebildet. Die beiden Lagen 31, 32 sind entlang der axialen Richtung derart beabstandet, dass der als Gegenstruktur 15 dienende Haken mit seinem radial abragenden freien Ende zwischen die beiden Lagen einschiebbar ist. Der Abstand zwischen den beiden Lagen 31, 32 kann als zweiter Abstand a2 bezeichnet werden. Er kann z.B. wenigstens 1 mm betragen.

Die zweite Lage 32 weist wenigstens eine Lagen-Durchgangsöffnung 34 auf (hier sind zwei Lagen-Durchgangsöffnungen 34 ausgebildet), die zum Durchstecken der Gegenstruktur 15 ausgebildet ist. Ein Rand 35 der Lagen-Durchgangsöffnung 34 bildet den Hinterschnitt 30.

Auf diese Weise kann der Filtereinsatz 20 in einfacher Weise schnell, sicher und zumindest entlang der axialen Richtung A (im Wesentlichen) ortsfest am bzw. im Flüssigkeitsfilter 1 angeordnet werden. Der Deckel 3 dient hierbei als Montagewerkzeug und als Demontagewerkzeug. Der Deckel 3 ist in diesem Ausführungsbeispiel schraubbar mit dem Gehäuse 2 verbindbar bzw. verbunden. Auch andere Befestigungsmöglichkeiten sind denkbar.

Der Flüssigkeitsfilter 1 bzw. der Filtereinsatz 20 weist in diesem Ausführungsbeispiel weiterhin ein Volumenausgleichselement 40 auf. Die erste Endkappe 21 weist in diesem Ausführungsbeispiel eine erste Durchgangsöffnung 26 auf. Das Volumenausgleichselement 40 kann z.B. dazu eingerichtet sein, bei einer Änderung des Volumens der im Innern des Flüssigkeitsfilters 1 eingeschlossenen Flüssigkeit komprimiert zu werden, und so einen Druckanstieg auf das Gehäuse 2 und den Deckel 3 zu reduzieren, so dass das Gehäuse-Deckel-Ensemble nicht beschädigt wird, z.B. beim Übergang von flüssigem Wasser zu Eis.

Das Volumenausgleichselement 40 kann zumindest zu einem Teil als Material einen Elastomer aufweisen. Es kann z.B. in einem Spritzgussprozess hergestellt sein.

Das Volumenausgleichselement 40 weist eine Basis 43 und einen Zentralkörper 41 auf. Der Zentralkörper 41 ist an bzw. mit einem ersten Ende 44 an der Basis 43 angeordnet, wobei der Zentralkörper 41 entlang einer Längsrichtung LR von der Basis 43 abragt und ein von dem ersten Ende 44 abgewandtes zweites Ende 45 aufweist, das hier beispielhaft freitragend ausgebildet ist. Der Zentralkörper 41 ist hier beispielhaft zwischen dem ersten Ende 44 und dem zweiten Ende 45 geschlossen ausgebildet. In seinem Zentralkörper-Innenraum 42 ist er hohl ausgebildet, mit Ausnahme einer sich entlang der axialen Richtung A erstreckenden Rippe 50. Die Rippe 50 verbessert eine Verwindungssteifigkeit des Zentralkörpers 41.

In anderen Ausführungsformen kann der Zentralkörper 41 mit einem elastisch reversibel verformbaren Material, z.B. einem Schaumstoff, ausgefüllt sein.

Der Zentralkörper 41 ragt in diesem Ausführungsbeispiel durch die erste Durchgangsöffnung 26 der ersten Endkappe 21 hindurch in den Innenraum 25 des Filtereinsatzes 20 hinein. Der Zentralkörper 41 ragt dabei hier sogar durch eine zweite Durchgangsöffnung 27 in der zweiten Endkappe 22 hindurch. Er ist hier somit sogar länger als die Länge L des Filtereinsatzes 20 zwischen den beiden Endkappen 21, 22. Es sind jedoch auch kürzere Zentralkörper 41 denkbar.

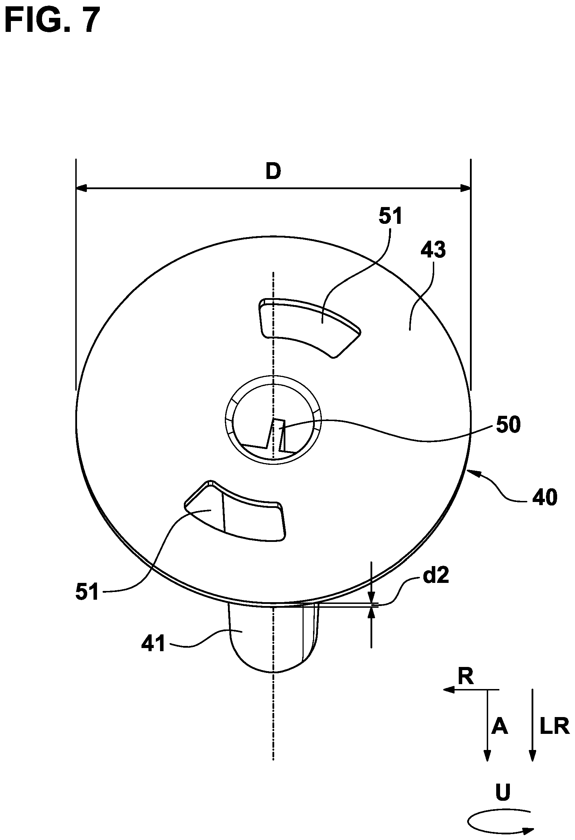

Die Basis 43 ist an einer vom Innenraum 25 abgewandten Außenseite 36 der ersten Endkappe 21 angeordnet. Die Basis 43 ist flach ausgebildet, insbesondere über den überwiegenden Teil ihrer Erstreckung nicht gekrümmt. Sie erstreckt sich beispielhaft in einer Ebene, die sich hier in radialer Richtung R erstreckt. Die Längsrichtung LR stellt hier beispielhaft die Flächennormale der Basis 43 dar. Die Basis 43 weist eine zweite Dicke d2 auf. Diese kann z.B. in einem Bereich zwischen 1mm und 10mm liegen. Ein Durchmesser D (**Fig. 7**) der Basis 43 kann z.B. im Bereich zwischen 3cm und 30cm liegen.

Am Volumenausgleichselement 40 ist ein Befestigungselement 46 ausgebildet, das eingerichtet ist, das Volumenausgleichselement 40 verliersicher an der ersten Endkappe 21 des Filtereinsatzes 20 zu haltern.

Das Befestigungselement 46 ist hier beispielhaft an dem Zentralkörper 41 angeordnet. Es ist in der Nähe bzw. im Bereich des ersten Endes 44 angeordnet. Es ist hier beispielhaft als ein nach radial außen abragender Vorsprung 47 ausgebildet. Das Befestigungselement 46 weist hier beispielhaft eine Einführschräge 48 auf. Es ist hier in der Form einer Nase ausgebildet. Das Befestigungselement 46 kann den Zentralkörper 41 entlang der Umlaufrichtung U betrachtet vollständig umlaufen.

Das Befestigungselement 46 ist hier beispielhaft um einen ersten Abstand a1 von der Basis 43 beabstandet, insbesondere von einer dem Zentralkörper 41 zugewandten ersten Seite 49 der Basis 43. Der erste Abstand a1 kann z.B. in einem Bereich von 85% bis 100% einer ersten Dicke d1 der ersten Endkappe 21, insbesondere im Bereich der ersten Durchgangsöffnung 26, liegen. Durch dieses Untermaß kann das - vorteilhaft elastisch ausgebildete - Volumenausgleichselement 40 straff (aber zerstörungsfrei lösbar) an der ersten Endkappe 21 festgelegt werden.

Der Zentralkörper 41 weist entlang der Längsrichtung LR betrachtet in einem Bereich zwischen der Basis 43 und dem Befestigungselement 46 einen Außendurchmesser DA auf, der mindestens 90% eines Innendurchmessers DI der ersten Durchgangsöffnung 26 der ersten Endkappe 21 beträgt, bevorzugt wenigstens 95% des Innendurchmessers DI. Der Außendurchmesser DA kann sogar ein (geringes) Übermaß gegenüber dem Innendurchmesser DI aufweisen. Dadurch wird eine radiale Positionierung besonders reproduzierbar gestaltet. Weiterhin wird dadurch - auch im komprimierten Zustand - eine besonders gute interne Dichtung 60 bzw. eine besonders lange interne Dichtstrecke 61 geschaffen (im Bereich der ersten Endkappe 21).

Als interne Dichtung 60 ist hierbei eine Abdichtung der Reinseite 7 von der Rohseite 8 zu verstehen. Die interne Dichtung 60 verhindert somit einen ungewollten fluidischen Kurzschluss zwischen der Reinseite 7 und der Rohseite 8. Es versteht sich, dass zur vollständigen internen Dichtung hier beispielhaft noch die zweite Filtereinsatzdichtung 72 notwendig ist, die hier an der zweiten Endkappe 22 angeordnet ist und die hier nicht näher betrachtet werden soll.

Die Basis 43 liegt in diesem Ausführungsbeispiel entlang des überwiegenden Teils der zweiten Lage 32 an der ersten Endkappe 21 an. Dadurch wird die interne Dichtung 60 erhöht bzw. die interne Dichtstrecke 61 verlängert.

Die Basis 43 des Volumenausgleichselements 40 ist im Bereich der ersten Durchgangsöffnung 26 in axialer Richtung A betrachtet zwischen der ersten Endkappe 21 und dem Deckelboden 18 angeordnet. Sie kann zusätzlich zwischen erster Endkappe 21 und Deckelboden 18 verpresst bzw. zusammengepresst sein. Dies kann z.B. durch eine geeignete Beabstandung zwischen dem Deckelboden 18 und dem freien Hakenende des Hakens 16, die als dritter Abstand a3 bezeichnet werden kann, sowie der ersten Dicke d1 der ersten Endkappe 21 und der zweiten Dicke d2 der Basis 43 bewirkt werden. Ist der durch Befestigungsstruktur 28 und Gegenstruktur 15 bewirkte Abstand zwischen Deckelboden 18 und einer dem Deckelboden 18 zugewandten Außenseite 36 der ersten Endkappe 21 ungefähr so groß oder geringer als die zweite Dicke d2 der Basis 43, so wird die Basis 43 zwischen Deckelboden 18 und erster Endkappe 21 verpresst bzw. zusammengepresst. Dadurch wird die interne Dichtung 60 verbessert (die interne Dichtung 60 kann grundsätzlich schon durch das Befestigungselement 46 bewirkt werden und ein dadurch bewirktes Festklemmen der Basis 43 an der Außenseite 36 der ersten Endkappe 21).

Mit anderen Worten: Das Volumenausgleichselement 40 bildet in diesem Ausführungsbeispiel eine interne Dichtung 50 aus, wobei die interne Dichtung 60 die erste Durchgangsöffnung 26 fluiddicht abdichtet. Dadurch wird ein fluidischer Kurzschluss zwischen der Reinseite 7 und der Rohseite 8 durch die erste Durchgangsöffnung 26 hindurch verhindert.

Die interne Dichtung 60 wird hier beispielhaft mittels der Basis 43 und/oder mittels des Befestigungselements 46 geschaffen. Auch der zwischen Basis 43 und Befestigungselement 46 liegende Abschnitt des Zentralkörpers 41 kann zur internen Dichtung 60 beitragen. Die zugehörige interne Dichtstrecke 61 ist in **Fig. 2b** mit einer dicken Linie eingezeichnet.

Dadurch, dass das Volumenausgleichselement 40 die interne Dichtung 60 im Bereich der ersten Durchgangsöffnung 26 sicherstellt kann im Unterschied zum Filtereinsatz 20 aus **Fig. 1** die erste Filtereinsatzdichtung 71 eingespart werden. Dadurch entfällt vorteilhaft ein separates Teil, das für die Montage bereitgehalten und in der Montage korrekt montiert werden muss. Außerdem entfällt dadurch vorteilhaft eine Reibungskraft aufgrund einer radial nach außen zum Gehäuse 2 hin wirkenden Dichtung beim Einsetzen des Filtereinsatzes 20 in das Gehäuse 2 oder beim Entfernen des Filtereinsatzes 20 aus dem Gehäuse 2.

Weiterhin überragt in diesem Ausführungsbeispiel die Basis 43 in der zur axialen Richtung A senkrechten radialen Richtung R die erste Endkappe 21, insbesondere um wenigstens 5% eines Radius RA der ersten Endkappe 21. Die Basis 43 überragt die erste Endkappe 21 in diesem Ausführungsbeispiel entlang der Umlaufrichtung U betrachtet an allen Stellen. Die Überragung kann dabei z.B. an allen Stellen gleich groß sein. Dadurch kann die Basis 43 auch als externe Dichtung 62 verwendet werden.

Das Gehäuse 2 weist eine dem Deckel 3 zugewandte Stirnseite 17 auf, wobei die Basis 43 des Volumenausgleichselements 40 in axialer Richtung A betrachtet zwischen der Stirnseite 17 und dem Deckelboden 18 angeordnet ist, insbesondere verpresst ist. Die Basis 43 bildet eine externe Dichtung 62 aus, die das Innere 6 des Gehäuses 2 fluiddicht von einem Außenraum 9 des Flüssigkeitsfilters 1 abdichtet.

Die Basis 43 ersetzt hier als axiale Dichtung die in dem Flüssigkeitsfilter 1 nach **Fig. 1** notwendige Gehäusedichtung 70. Dadurch wird vorteilhaft eine weitere, separate Dichtung eingespart.

In der Mitte des Deckels 3 ist hier beispielhaft eine Deckelöffnung 80 angeordnet. Sie ist hier lediglich beispielhaft mit einem Druckausgleichselement 81, welches z.B. in die Deckelöffnung 80 eingeclipst ist, verschlossen. Wenn das Volumenausgleichselement 40 zusammengepresst wird kann Luft aus dem Zentralkörper-Innenraum 42 durch die Deckelöffnung 80 bzw. das darin angeordnete Druckausgleichselement 81 entweichen. Dehnt sich der Zentralkörper-Innenraum 42 wieder aus, so kann durch die Deckelöffnung 80 bzw. das Druckausgleichselement 81 Luft in ihn hineinströmen. Das Druckausgleichselement 81 kann eine Membran 82 aufweisen, die das Eindringen von Schmutz, Dreck und/oder Feuchtigkeit, z.B. Spritzwasser, in den Zentralkörper-Innenraum 42 verhindert. Es versteht sich, dass die Deckelöffnung 80 und/oder das Druckausgleichselement 81 auch entfallen können. Beispielsweise kann der Zentralkörper-Innenraum 42 geschlossen bzw. mit einem Füllmaterial ausgefüllt sein (z.B. einem Schaumstoff). Dann ist kein Gasaustritt bzw. Gaseintritt durch den Deckel 3 notwendig.

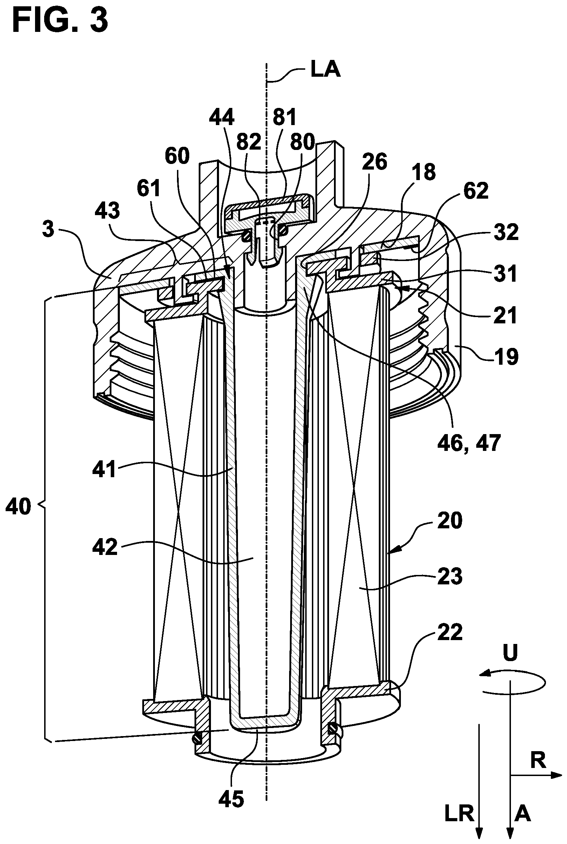

Eine bevorzugte normale Einbaulage des Flüssigkeitsfilters 1, z.B. in einem Kraftfahrzeug, kann z.B. so gestaltet sein, dass die Schwerkraftrichtung in den **Figs. 2a** **und** **2b** (sowie in den folgenden **Figs. 3 bis 7****)** nach oben weist, also entgegen der Richtung des Pfeils der axialen Richtung A. Der Deckel 3 zeigt dann im eingebauten Zustand im Fahrzeug nach unten. Auch eine Abweichung von dieser Lage um bis zu ca. +/- 45° kann möglich sein. Diese Einbaulage erfordert somit regelmäßig eine "über Kopf"-Montage, d.h.: der Filtereinsatz 20 würde ohne montierten Deckel 3 nach unten (entlang der Schwerkraft betrachtet) in Richtung des Erdbodens zeigen und müsste in dieser Position gehalten werden, bis der Deckel 3 montiert ist.

Grundsätzlich kann die Schwerkraftrichtung bei normaler Einbaulage auch in den Figuren nach unten weisen (also entlang der axialen Richtung A).

**Figur 3** zeigt eine geschnittene schematische perspektivische Ansicht eines Deckels 3 eines Flüssigkeitsfilters 1 mit daran montiertem Filtereinsatz 20 und Volumenausgleichselement 40. Das Filtermedium 23 ist hier z.B. sterngefaltet ausgebildet und kann z.B. aus einem Filterpapier gebildet sein. Es wird hier in radialer Richtung R durchströmt.

In **Fig. 3** ist gut zu erkennen, dass die Basis 43 radial beabstandet vom Zentralkörper 41 wenigstens eine Basis-Durchgangsöffnung 51 aufweist. Durch diese hindurch kann die hier als Haken 16 ausgebildete Gegenstruktur 15 hindurchgreifen und dann weiter durch die Lagen-Durchgangsöffnung 34 hindurchgreifen, um mit der als Hinterschnitt 30 ausgebildeten Befestigungsstruktur 28 zu koppeln. In einem Zustand, in dem das Volumenausgleichselement 40 am Filtereinsatz 20 montiert ist fluchten die Lagen-Durchgangsöffnung(en) 34 mit den Basis-Durchgangsöffnung(en) 51. Dadurch wird für einen Monteur vorteilhaft z.B. optisch oder haptisch erkennbar, ob bzw. dass das Volumenausgleichselement 40 korrekt am Filtereinsatz 20 montiert ist.

Weiterhin ist zu erkennen, dass die Basis 43 (nahezu) den gesamten Deckelboden 18 bedeckt.

Der Zentralkörper 41 ist in seinem Zentralkörper-Innenraum 42 hier hohl ausgebildet und weist im Bereich des ersten Endes 44 eine Öffnung auf, in die ein mit einem Ventil versehener Stutzen des Deckels 3 eingreift.

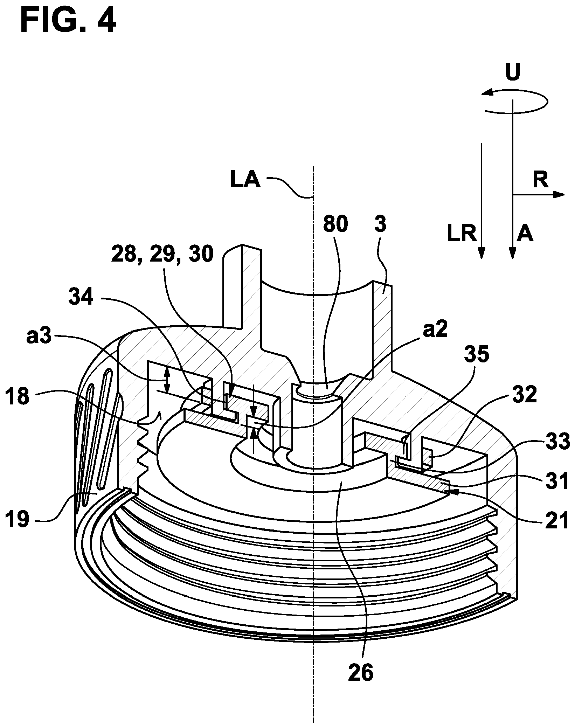

**Figur 4** zeigt eine schematische perspektivische Ansicht eines Deckels 3 eines Flüssigkeitsfilters 1 und eine daran befestigten erste Endkappe 21 eines Filtereinsatzes 20. Hier sind gut die im Wesentlichen parallelen erste und zweite Lage 31, 32 sowie der sie verbindende Kragen 33 zu erkennen. Auch die Ausbildung des Hinterschnitts 30 an der zweiten Lage 32 ist gut zu erkennen. Die erste Endkappe 21 weist hier eine gestufte Form auf.

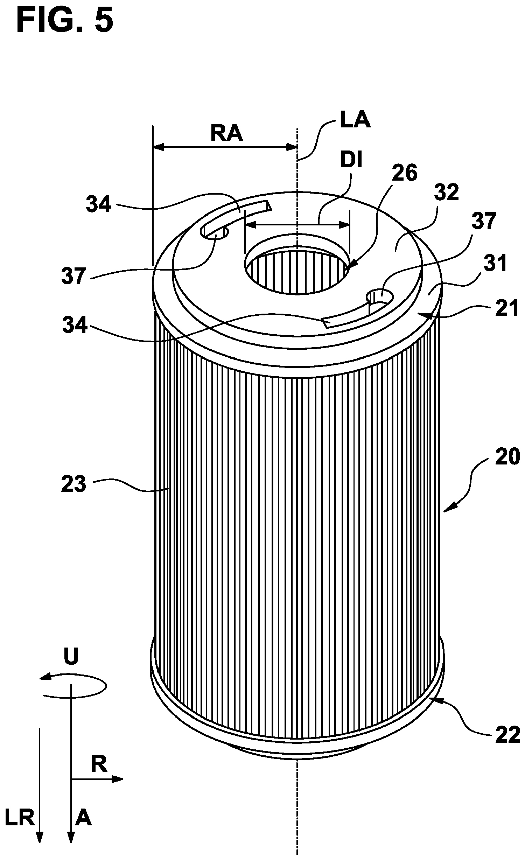

**Figur 5** zeigt eine schematische perspektivische Ansicht eines Filtereinsatzes 20 für einen Flüssigkeitsfilter 1. Beispielhaft sind hier zwei Lagen-Durchgangsöffnungen 34 in der axial äußeren zweiten Lage 32 zu erkennen. Die Lagen-Durchgangsöffnungen 34 liegen hier bezüglich der ersten Durchgangsöffnung 26 diametral einander gegenüber. Sie sind jeweils als konzentrisch angeordnete Kreissegmente ausgebildet.

Sie weisen jeweils an einem ihrer Enden eine vergrößerte End-Öffnung 37 (hier: in radialer Richtung R vergrößert) auf. Durch diese End-Öffnungen 37 kann z.B. die als Haken 16 ausgebildete Gegenstruktur 15 eingeführt werden. Bei einer Verdrehung hintergreift dann der Haken 16 in der schlitzartigen Lagen-Durchgangsöffnung 34 den Rand 35 der Lagen-Durchgangsöffnung 34 und bewirkt so die Kopplung z.B. zwischen dem Deckel 3 des Flüssigkeitsfilters 1 und dem Filtereinsatz 20. Die End-Öffnung 37 ist hier entlang der axialen Richtung A (hier: nach unten schauend) betrachtet am linken Ende der Lage-Durchgangsöffnung 34 angeordnet, also am Ende, das entgegengesetzt zur Uhrzeigerrichtung gewandt ist. Auf diese Weise wird der Filtereinsatz 20 am Deckel 3 weiter gesichert, wenn der Deckel 3 am Gehäuse 2 festgeschraubt wird (es wird ein rechtsdrehend schließender Deckel angenommen).

Dadurch, dass der Hinterschnitt 30 am Rand 35 der Lagen-Durchgangsöffnung 34 angeordnet ist und somit die zweite Lage 32 sich radial noch weiter nach außen erstreckt, wird eine unregelmäßige Außenkontur der ersten Endkappe 21 vermieden.

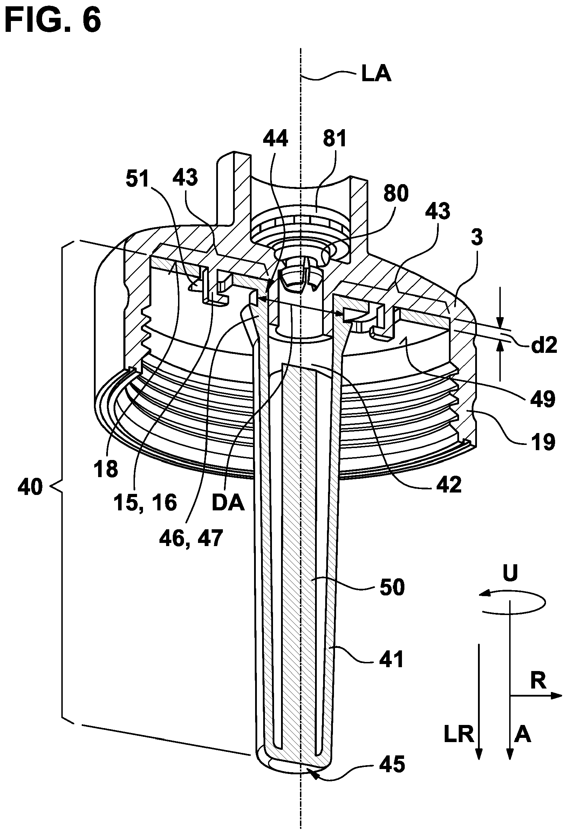

**Figur 6** zeigt eine schematische perspektivische Ansicht eines Deckels 3 eines Flüssigkeitsfilters 1 und eines Volumenausgleichselements 40. In dieser Darstellung sind gut die beiden Basis-Durchgangsöffnungen 51 zu erkennen sowie die Rippe 50 im Zentralkörper-Innenraum 42.

Weiterhin ist das als nasenartiger Vorsprung 47 ausgebildete Befestigungselement 46 mit der Einführschräge 48 gut erkennbar.

**Figur 7** zeigt eine perspektivische Schrägaufsicht auf ein Volumenausgleichselement 40. Auch hier sind gut die beiden Basis-Durchgangsöffnungen 51 zu erkennen, die hier kreissegmentförmig ausgebildet sind, sowie die Rippe 50 im Zentralkörper-Innenraum 42. Die Basis 43 ist hier kreisrund ausgebildet. Sie weist den Durchmesser D und die zweite Dicke d2 auf. Sie verläuft in einer einzigen Ebene ohne Krümmung. Sie ist flach ausgebildet. Sie kann dadurch gut am Deckelboden 18 und gut an der ersten Endkappe 21 anliegen. Dadurch kann sie sowohl die interne Dichtung 60 mit einer großen internen Dichtstrecke 61 ausbilden als auch die externe Dichtung 62 mit ausreichender externer Dichtstrecke 63 sicherstellen.

Das Volumenausgleichselement 40 vereint somit mehrere Funktionen in einem einzigen, hier einstückig ausgebildeten Element:
Es dient zum Ausgleich von z.B. temperaturbedingten Volumenänderungen im Innern des Flüssigkeitsfilters 1. Weiterhin dient es dazu, die interne Dichtung 60 im Bereich der ersten Endkappe 21 sicherzustellen und damit ein separates Dichtelement verzichtbar zu machen. Weiterhin dient es dazu, die externe Dichtung 62 sicherzustellen und dadurch ein weiteres separates Dichtelement verzichtbar zu machen. Schließlich weist es eine Befestigungsfunktion mittels des Befestigungselements 46 auf, durch welche es sicher und zuverlässig und ortsfest am Filtereinsatz 20 montierbar ist und so eine sichere und korrekte Montage auch bei schwierigen Einbausituationen im Flüssigkeitsfilter 1 gewährleistet (z.B. eine "kopfüber"-Montage).

Abschließend sei angemerkt, dass das Volumenausgleichselement 40 und der Flüssigkeitsfilter 1 z.B. für den Einsatz in Wasserfiltern oder in Filtern für wässrige Lösungen, z.B. wässrige Harnstofflösungen für DENOX-Anwendungen im Automobilbereich verwendbar sind. Jedoch ist grundsätzlich auch eine Verwendung in Diesel, Öl- und Benzinfiltern denkbar.

## Patentansprüche

1. Filtereinsatz für einen, insbesondere ein Gehäuse und einen Deckel aufweisenden, Flüssigkeitsfilter, der Filtereinsatz aufweisend:
-- eine erste Endkappe (21), die insbesondere dem Deckel (3) zugewandt ist;
-- eine zweite Endkappe (22);
-- ein in einer axialen Richtung (A) zwischen den beiden Endkappen (21, 22) angeordnetes Filtermedium (23);
wobei die erste Endkappe (21) exzentrisch zu einer Längsachse (LA) eine, insbesondere die erste Endkappe (21) nicht vollständig umlaufende, Befestigungsstruktur (28) aufweist, mittels derer der Filtereinsatz (20) im Flüssigkeitsfilter (1) lösbar befestigbar ist,
wobei an der ersten Endkappe (21) ein Hinterschnitt (30) ausgebildet ist, der als Befestigungsstruktur (28) dient,
wobei der Hinterschnitt (30) mit einer als Haken (16) ausgebildeten Gegenstruktur (15), insbesondere am Deckel (3), des Flüssigkeitsfilters (1) koppelbar ist,
wobei die erste Endkappe (21) entlang der axialen Richtung (A) betrachtet eine axial innere erste Lage (31) und eine davon beabstandete axial äußere zweite Lage (32) aufweist,
wobei die erste Lage (31) und die zweite Lage (32) durch einen sich in axialer Richtung (A) erstreckenden Kragen (33) miteinander verbunden sind,
wobei die erste Lage (31) und die zweite Lage (32) insbesondere zumindest abschnittsweise überlappen,
wobei der Hinterschnitt (30) an der zweiten Lage (32) ausgebildet ist.

2. Filtereinsatz nach dem vorhergehenden Anspruch,
wobei die Befestigungsstruktur (28) als ein Bajonettverschluss (29) oder als ein Clipsverschluss ausgebildet ist.

3. Filtereinsatz nach einem der vorhergehenden Ansprüche,
wobei die Befestigungsstruktur (28) zusätzlich als ein von der ersten Endkappe (21) axial nach außen abragender Haken ausgebildet ist, der mit einer als Hinterschnitt ausgebildeten Gegenstruktur (15), die insbesondere am Deckel (3) des Flüssigkeitsfilters (1) ausgebildet ist, koppelbar ist.

4. Filtereinsatz nach dem vorhergehenden Anspruch
wobei die zweite Lage (32) wenigstens eine Lagen-Durchgangsöffnung (34) aufweist, die zum Durchstecken der Gegenstruktur (15) ausgebildet ist,
wobei ein Rand (35) der Lagen-Durchgangsöffnung (34) den Hinterschnitt (30) bildet.

5. Filtereinsatz nach einem der vorhergehenden Ansprüche,
wobei der Filtereinsatz (20) weiterhin ein Volumenausgleichselement (40) mit einer Basis (43) und einem Zentralkörper (41) aufweist,
wobei der Zentralkörper (41) an einem ersten Ende (44) an der Basis (43) angeordnet ist,
wobei der Zentralkörper (41) entlang einer Längsrichtung (LR) von der Basis (43) abragt und ein von dem ersten Ende (44) abgewandtes zweites Ende (45) aufweist, das insbesondere freitragend ausgebildet ist,
wobei am Volumenausgleichselement (40) ein Befestigungselement (46) ausgebildet ist, das eingerichtet ist, das Volumenausgleichselement (40) verliersicher an der ersten Endkappe (21) des Filtereinsatzes (20) zu haltern.

6. Filtereinsatz nach dem vorhergehenden Anspruch,
wobei die erste Endkappe (21) eine erste Durchgangsöffnung (26) aufweist, wobei der Zentralkörper (41) durch die erste Durchgangsöffnung (26) hindurch in den Innenraum (25) des Filtereinsatzes (20) hineinragt,
wobei die Basis (43) an einer vom Innenraum (25) abgewandten Außenseite (36) der ersten Endkappe (21) angeordnet ist.

7. Filtereinsatz nach einem der zwei vorhergehenden Ansprüche
wobei die Basis (43) in einer zur axialen Richtung (A) senkrechten radialen Richtung (R) die erste Endkappe (21) überragt,
insbesondere um wenigstens 5% eines Radius (RA) der ersten Endkappe (21).

8. Filtereinsatz nach einem der drei vorhergehenden Anspruch,
wobei das Volumenausgleichselement (40), insbesondere mittels der Basis (43) und/oder mittels des Befestigungselements (46), eine interne Dichtung (50) ausbildet,
wobei die interne Dichtung (60) die erste Durchgangsöffnung (26) fluiddicht abdichtet,
insbesondere derart, dass ein fluidischer Kurzschluss zwischen der Reinseite (7) und der Rohseite (8) durch die erste Durchgangsöffnung (26) hindurch verhindert ist.

9. Filtereinsatz nach einem der vier vorhergehenden Ansprüche,
wobei das Befestigungselement (46) an dem Zentralkörper (41) angeordnet ist,
wobei das Befestigungselement (46) insbesondere als ein nach radial außen abragender Vorsprung (47) ausgebildet ist,
wobei das Befestigungselement (46) insbesondere eine Einführschräge (48) aufweist.

10. Filtereinsatz nach einem der fünf vorhergehenden Ansprüche,
wobei das Befestigungselement (46) um einen ersten Abstand (a1) von der Basis (43) beabstandet ist, insbesondere von einer dem Zentralkörper (41) zugewandten ersten Seite (49) der Basis (43),
wobei der erste Abstand (a1) in einem Bereich von 85% bis 100% einer ersten Dicke (d1) der ersten Endkappe (21), insbesondere im Bereich der ersten Durchgangsöffnung (26), liegt.

11. Filtereinsatz nach einem der sechs vorhergehenden Ansprüche,
wobei der Zentralkörper (41) entlang der Längsrichtung (LR) betrachtet in einem Bereich zwischen der Basis (43) und dem Befestigungselement (46) einen Außendurchmesser (DA) aufweist, der mindestens 90% eines Innendurchmessers (DI) der ersten Durchgangsöffnung (26) der ersten Endkappe (21) beträgt, bevorzugt wenigstens 95% des Innendurchmessers (DI).

12. Flüssigkeitsfilter, der Flüssigkeitsfilter aufweisend:
-- ein Gehäuse (2);
-- einen Deckel (3) mit einem Deckelboden (18);
-- einen in ein Inneres (6) des Gehäuses eingesetzten Filtereinsatz (20) nach einem der vorhergehenden Ansprüche;
wobei insbesondere der Filtereinsatz (20) (40) verliersicher am Deckel (3) gehaltert ist.

13. Flüssigkeitsfilter nach dem vorhergehenden Anspruch mit einem Filtereinsatz (20) nach einem der Ansprüche 5 bis 11,
wobei das Gehäuse (2) eine dem Deckel (3) zugewandte Stirnseite (17) aufweist,
wobei die Basis (43) des Volumenausgleichselements (40) in axialer Richtung (A) betrachtet zwischen der Stirnseite (17) und dem Deckelboden (18) angeordnet, insbesondere verpresst, ist,
wobei die Basis (43) eine externe Dichtung (62) ausbildet, die das Innere (6) des Gehäuses (2) fluiddicht von einem Außenraum (9) des Flüssigkeitsfilters (1) abdichtet.

14. Flüssigkeitsfilter nach einem der beiden vorhergehenden Ansprüche,
wobei die Basis (43) des Volumenausgleichselements (40) im Bereich der ersten Durchgangsöffnung (26) in axialer Richtung (A) betrachtet zwischen der ersten Endkappe (21) und dem Deckelboden (18) angeordnet, insbesondere verpresst, ist.

## Claims

1. Filter insert for a liquid filter which in particular has a housing and a cover, the filter insert having:
- a first end cap (21) which in particular faces the cover (3);
- a second end cap (22);
- a filter medium (23) which in an axial direction (A) is disposed between the two end caps (21, 22);
wherein the first end cap (21) has a fastening structure (28) which is eccentric in relation to a longitudinal axis (LA) and in particular does not fully encircle the first end cap (21) and by means of which the filter insert (20) is releasably fastenable in the liquid filter (1),
wherein an undercut (30) which serves as the fastening structure (28) is formed on the first end cap (21),
wherein the undercut (30) is able to be coupled to a mating structure (15), which is formed as a hook (16) in particular on the cover (3) of the liquid filter (1),
wherein the first end cap (21) when viewed along the axial direction (A) has an axially inner first ply (31) and, spaced apart therefrom, an axially outer ply (32),
wherein the first ply (31) and the second ply (32) are connected to one another by a collar (33) which extends in the axial direction (A),
wherein the first ply (31) and the second ply (32) overlap one another in particular at least in portions,
wherein the undercut (30) is formed on the second ply (32).

2. Filter insert according to the preceding claim,
wherein the fastening structure (28) is designed as a bayonet closure (29) or as a clip closure.

3. Filter insert according to one of the preceding claims,
wherein the fastening structure (28) is additionally formed as a hook which protrudes axially outwards from the first end cap (21) and is able to be coupled to a mating structure (15) which is formed as an undercut in particular on the cover (3) of the liquid filter (1).

4. Filter insert according to the preceding claim,
wherein the second ply (32) has at least one ply passage opening (34) which is designed for penetration by the mating structure (15),
wherein a periphery (35) of the ply passage opening (34) forms the undercut (30).

5. Filter insert according to one of the preceding claims,
wherein the filter insert (20) furthermore has a volume compensation element (40) having a base (43) and a central member (41),
wherein the central member (41) is disposed on a first end (44) on the base (43),
wherein the central member (41) protrudes from the base (43) in a longitudinal direction (LR) and has a second end (45) which faces away from the first end (44) and is in particular designed as a cantilever,
wherein a fastening element (46) which is configured to captively mount the volume compensation element (40) on the first end cap (21) of the filter insert (20) is formed on the volume compensation element (40).

6. Filter insert according to the preceding claim,
wherein the first end cap (21) has a first passage opening (26),
wherein the central member (41) protrudes through the first passage opening (26) into the interior space (25) of the filter insert (20),
wherein the base (43) is disposed on an external side (36) of the first end cap (21) that faces away from the interior space (25).

7. Filter insert according to one of the two preceding claims,
wherein the base (43) in a radial direction (R) perpendicular to the axial direction (A) protrudes beyond the first end cap (21),
in particular by at least 5% of a radius (RA) of the first end cap (21).

8. Filter insert according to one of the three preceding claims,
wherein the volume compensation element (40), in particular by means of the base (43) and/or by means of the fastening element (46), forms an internal seal (50),
wherein the internal seal (60) seals the passage opening (26) in a fluid-tight manner,
in particular in such a manner that a fluidic short circuit between the clean side (7) and the dirty side (8) by way of the passage opening (26) is prevented as a result.

9. Filter insert according to one of the four preceding claims,
wherein the fastening element (46) is disposed on the central member (41),
wherein the fastening element (46) is in particular formed as a radially outwardly protruding projection (47),
wherein the fastening element (46) has in particular an introduction ramp (48).

10. Filter insert according to one of the five preceding claims,
wherein the fastening element (46) is spaced apart from the base (43) by a first spacing (a1), in particular from a first side (49) of the base (43) that faces the central member (41),
wherein the first spacing (a1) is in a range from 85% to 100% of a first thickness (d1) of the first end cap (21), in particular in the region of the first passage opening (26).

11. Filter insert according to one of the six preceding claims,
wherein the central member (41) when viewed along the longitudinal direction (LR), in a region between the base (43) and the fastening element (46), has an external diameter (DA) which is at least 90% of an internal diameter (DI), preferably at least 95% of the internal diameter (DI), of the first passage opening (26) of the first end cap (21).

12. Liquid filter, the liquid filter having:
- a housing (2);
- a cover (3) having a cover base (18);
- a filter insert (20) according to one of the preceding claims, which is inserted into an interior (6) of the housing;
wherein the filter insert (20) (40) is in particular captively mounted on the cover (3).

13. Liquid filter according to the preceding claim, having a filter insert (20) according to one of Claims 5 to 11,
wherein the housing (2) has an end side (17) that faces the cover (3),
wherein the base (43) of the volume compensation element (40) when viewed in the axial direction (A) is disposed between the end side (17) and the cover base (18), in particular press-fitted therein,
wherein the base (43) forms an external seal (62) which seals the interior (6) of the housing (2) in a fluid-tight manner in relation to an external space (9) of the liquid filter (1).

14. Liquid filter according to one of the two preceding claims,
wherein the base (43) of the volume compensation element (40) when viewed in the axial direction (A) in the region of the first passage opening (26) is disposed between the first end cap (21) and the cover base (18), in particular press-fitted therein.

## Revendications

1. Insert filtrant pour un filtre à liquide, notamment présentant un boîtier et un couvercle, l'insert filtrant présentant :
-- un premier capuchon d'extrémité (21) faisant notamment face au couvercle (3) ;
-- un deuxième capuchon d'extrémité (22) ;
-- un milieu filtrant (23) agencé dans une direction axiale (A) entre les deux capuchons d'extrémité (21, 22) ;
le premier capuchon d'extrémité (21) présentant, de manière excentrée par rapport à un axe longitudinal (LA), une structure de fixation (28), notamment n'entourant pas complètement le premier capuchon d'extrémité (21), au moyen de laquelle l'insert filtrant (20) peut être fixé de manière amovible dans le filtre à liquide (1),
une contre-dépouille (30) étant réalisée sur le premier capuchon d'extrémité (21), laquelle sert de structure de fixation (28),
la contre-dépouille (30) pouvant être couplée à une contre-structure (15) réalisée sous forme de crochet (16), notamment sur le couvercle (3), du filtre à liquide (1),
le premier capuchon d'extrémité (21), vu le long de la direction axiale (A), présentant une première couche axialement intérieure (31) et une deuxième couche axialement extérieure (32) espacée de celle-ci,
la première couche (31) et la deuxième couche (32) étant reliées l'une à l'autre par un collet (33) s'étendant dans la direction axiale (A),
la première couche (31) et la deuxième couche (32) se chevauchant notamment au moins par sections,
la contre-dépouille (30) étant réalisée sur la deuxième couche (32).

2. Insert filtrant selon la revendication précédente,
la structure de fixation (28) étant réalisée sous la forme d'une fermeture à baïonnette (29) ou sous la forme d'une fermeture à clip.

3. Insert filtrant selon l'une quelconque des revendications précédentes,
la structure de fixation (28) étant en outre réalisée sous la forme d'un crochet dépassant axialement vers l'extérieur du premier capuchon d'extrémité (21), qui peut être couplé à une contre-structure (15) réalisée sous forme de contre-dépouille, qui est notamment réalisée sur le couvercle (3) du filtre à liquide (1).

4. Insert filtrant selon la revendication précédente,
la deuxième couche (32) présentant au moins une ouverture de passage de couche (34) qui est réalisée pour être traversée par la contre-structure (15), un bord (35) de l'ouverture de passage de couche (34) formant la contre-dépouille (30).

5. Insert filtrant selon l'une quelconque des revendications précédentes, l'insert filtrant (20) présentant en outre un élément de compensation de volume (40) ayant une base (43) et un corps central (41),
le corps central (41) étant agencé à une première extrémité (44) sur la base (43),
le corps central (41) dépassant de la base (43) le long d'une direction longitudinale (LR) et présentant une deuxième extrémité (45) détournée de la première extrémité (44), qui est notamment réalisée en portée libre,
un élément de fixation (46) étant réalisé sur l'élément de compensation de volume (40), lequel est adapté pour maintenir l'élément de compensation de volume (40) sur le premier capuchon d'extrémité (21) de l'insert filtrant (20) de manière imperdable.

6. Insert filtrant selon la revendication précédente,
le premier capuchon d'extrémité (21) présentant une première ouverture de passage (26),
le corps central (41) faisant saillie à travers la première ouverture de passage (26) dans l'espace intérieur (25) de l'insert filtrant (20),
la base (43) étant agencée sur un côté extérieur (36) du premier capuchon d'extrémité (21), détourné de l'espace intérieur (25).

7. Insert filtrant selon l'une quelconque des deux revendications précédentes, la base (43) dépassant du premier capuchon d'extrémité (21) dans une direction radiale (R) perpendiculaire à la direction axiale (A),
notamment d'au moins 5 % d'un rayon (RA) du premier capuchon d'extrémité (21).

8. Insert filtrant selon l'une quelconque des trois revendications précédentes, l'élément de compensation de volume (40) réalisant, notamment au moyen de la base (43) et/ou au moyen de l'élément de fixation (46), un joint d'étanchéité interne (50),
le joint d'étanchéité interne (60) rendant étanche aux fluides la première ouverture de passage (26),
notamment de telle sorte qu'un court-circuit fluidique entre le côté propre (7) et le côté brut (8) soit empêché à travers la première ouverture de passage (26).

9. Insert filtrant selon l'une quelconque des quatre revendications précédentes, l'élément de fixation (46) étant agencé sur le corps central (41),
l'élément de fixation (46) étant notamment réalisé sous la forme d'une saillie (47) dépassant radialement vers l'extérieur,
l'élément de fixation (46) présentant notamment un biais d'insertion (48).

10. Insert filtrant selon l'une quelconque des cinq revendications précédentes, l'élément de fixation (46) étant espacé d'une première distance (a1) de la base (43), notamment d'un premier côté (49) de la base (43) faisant face au corps central (41),
la première distance (a1) se situant dans une plage de 85 % à 100 % d'une première épaisseur (d1) du premier capuchon d'extrémité (21), notamment dans la zone de la première ouverture de passage (26).

11. Insert filtrant selon l'une quelconque des six revendications précédentes,
le corps central (41), vu le long de la direction longitudinale (LR), dans une zone entre la base (43) et l'élément de fixation (46), présentant un diamètre extérieur (DA) qui est au moins égal à 90 % d'un diamètre intérieur (DI) de la première ouverture de passage (26) du premier capuchon d'extrémité (21), de préférence au moins 95 % du diamètre intérieur (DI).

12. Filtre à liquide, le filtre à liquide présentant :
-- un boîtier (2) ;
-- un couvercle (3) avec un fond de couvercle (18) ;
-- un insert filtrant (20) selon l'une quelconque des revendications précédentes, inséré dans un intérieur (6) du boîtier ;
l'insert filtrant (20) (40) étant notamment maintenu sur le couvercle (3) de manière imperdable.

13. Filtre à liquide selon la revendication précédente, avec un insert filtrant (20) selon l'une quelconque des revendications 5 à 11,
le boîtier (2) présentant un côté frontal (17) faisant face au couvercle (3),
la base (43) de l'élément de compensation de volume (40) étant agencée, notamment pressée, entre le côté frontal (17) et le fond de couvercle (18), vu dans la direction axiale (A),
la base (43) réalisant un joint d'étanchéité externe (62) qui rend l'intérieur (6) du boîtier (2) étanche aux fluides par rapport à un espace extérieur (9) du filtre à liquide (1).

14. Filtre à liquide selon l'une quelconque des deux revendications précédentes, la base (43) de l'élément de compensation de volume (40) étant agencée, notamment pressée, dans la zone de la première ouverture de passage (26), vue dans la direction axiale (A), entre le premier capuchon d'extrémité (21) et le fond de couvercle (18).
